# EUROPEAN PATENT APPLICATION

(11) **EP 4 838 295 A1**
(43) Date of publication of application: **11.11.2026**
(21) Application number: 26176692.7
(22) Date of filing: 05.05.2026
(51) Int. Cl.: G02F 1/35, G02F 1/39, G02F 1/355, G02F 1/365

(54) **APPARATUS FOR SQUEEZED LIGHT GENERATION AND METHOD FOR GENERATING SQUEEZED LIGHT**

(30) Priority: 08.05.2025 US 202563802230 P
(71) Applicant: Xanadu Quantum Technologies Holdings ULC, Toronto, Ontario M5G 2C8 (CA)
(72) Inventor: DRAGO, Christian, Toronto, M3J 1H1 (CA); MENOTTI, Matteo, Toronto, M5T 1V2 (CA); ZAIDI, Syed Zain-Ul-Abideen, Milton, L9T 5V8 (CA); MAHLER, Dylan Hans, Toronto, M4J 4A6 (CA)
(74) Representative: Hoyng Rokh Monegier B.V.

(57) **Abstract**

There is described an apparatus for squeezed light generation generally having: an optical medium having a third-order nonlinearity, and including a resonant cavity; a first pump light source in optical communication with the resonant cavity and propagating first pump light pulses therealong, the first pump light pulses having a first pump pulse energy; and a second pump light source in optical communication with the resonant cavity and propagating second pump light pulses therealong, the second pump light pulses having a second pump pulse energy; wherein the first and second pump pulse energies are greater than an energy threshold associated with a photon pair regime, the first and second pump light pulses generating a signal light beam in a squeezed state of light in the optical medium, said generating including inducing dynamical self-phase modulation and/or dynamical cross-phase modulation on the first and second pump light pulses within the optical medium.

## Description

### FIELD

The improvements generally relate to squeezed light generation and more specifically to generating squeezed light using nonlinear optical processes.

### BACKGROUND

Squeezed light (also referred to as light in a squeezed state) refers to light in which the electric field strength for some modes has a quantum uncertainty (also referred to as noise) smaller than that of a coherent state. A wide range of applications can benefit from high quality sources of squeezed light. For example, in metrology, using squeezed light allows certain optical sensors to overcome the shot noise limit and achieve sensitivities higher than possible with conventional light sources. In quantum communications, squeezed light can be used to distribute entanglement, thereby assisting cryptographic key distribution protocols. Squeezed light sources can also be used to deterministically generate large-scale, highly entangled quantum states, enabling the construction of scalable quantum simulation and computation devices operating in the optical domain using a continuous variable (CV) encoding. Although existing squeezed light generation techniques are satisfactory to a certain degree, there remains room for improvement.

### SUMMARY

One of the most promising squeezed light generation techniques which is scalable for real-life applications is integrated photonics. Integrated photonic devices come in many forms and can be fabricated in different materials each having their own advantages and shortcomings. To generate squeezed light in a material with extremely low optical loss, a promising choice is Silicon Nitride (SiₓN_{y}) since this material has a wide transparency window and can be fabricated in ultra low-loss platforms on the order of 0.06 dB/cm propagation loss. Further, silicon nitride is a centro-symmetric material making ${χ}_{3}^{ijkl} \left(r\right)$ its lowest order non-zero nonlinearity within which spontaneous four-wave mixing can be employed to generate photon pairs. Despite these advantages, silicon nitride has a relatively low ${χ}_{3}^{ijkl} \left(r\right)$ which increases the optical power requirements needed to generate squeezed light. To combat the low nonlinearity, light can be confined in all three spatial dimensions by making use of a known structure in integrated photonics - the resonant cavity. Examples of such resonant cavities can include, but are not limited to, ring cavities, spiral cavities, racetrack cavities, to name a few examples.

Integrated resonant cavities typically consist of a racetrack structure side coupled to a waveguide which allows light to couple in and then out of the racetrack structure. Light coupled into the resonant cavity circulates around the resonant cavity causing it to resonate and build up its intensity through constructive interference. Considering that the typical resonant cavities are fabricated with radii on the order of a few hundred micrometers, the field enhancement can be greatly enhanced. This effect can be compounded when using low loss structures, as light propagates in the resonant cavity for long times through many round trips before decaying out of the resonant cavity. The combined spatial and temporal confinement of light in the resonant cavity makes them somewhat ideal for nonlinear optics applications and are becoming a powerful tool for reducing power requirements of various classical and quantum nonlinear processes. Indeed, silicon nitride resonant cavity-based resonators are prominently used nowadays for a number of purposes including, but not limited to, squeezed light generation.

This disclosure presents systems and methods for generating squeezed light using a resonant cavity-based resonator. More specifically, two pump light beams are injected into a resonant cavity of an optical medium having a third-order nonlinearity, and when the two pump light beams are spectrally located on either side of a resonance corresponding to a desired squeezed field (hereinafter referred to as the "signal light beam"), squeezed light can be generated at the resonance via spontaneous four-wave mixing.

Up to now, existing techniques selected one of these two pump light beams to be a pulsed pump beam and the other to be a continuous-wave (CW) pump light beam. In such a configuration, the CW pump light beam generally carries relatively strong energy levels while the pulsed pump beam is kept at low pump energies to avoid creation of undesirable nonlinear effects including, but not limited to, self-phase modulation and cross-phase modulation, within the optical medium. These squeezed light generation techniques are said to be in the "photon pair regime" or in the "below threshold regime," where the pump light beams have energy levels below an energy threshold generally associated with the photon pair regime. However, in these circumstances, the number of photon pairs which can be generated at the resonance can often be limited due to the limited pump energy levels. It is intended that the energy threshold can vary from one apparatus to another. However, the energy threshold can be empirically measured when for instance more than just a photon pair is simultaneously generated. Accordingly, the energy threshold is generally met when multiple photon pairs are simultaneously generated within the resonant cavity.

The methods and systems described herein aim at alleviating at least some of these drawbacks. There is thus described an apparatus for squeezed light generation comprising an optical medium having a third-order nonlinearity, with the optical medium encompassing at least a resonant cavity. The apparatus is also provided with first and second pump light sources which are optically coupled to the optical medium via one or more optical coupler(s). During use, the first and second pump light sources both propagate first and second pump light pulses along the resonant cavity via the optical coupler(s). When pump pulse energies of the first and second pump light pulses are greater than the energy threshold associated with the photon pair regime, a signal light beam in a squeezed state of light can be generated in the resonant cavity via four-wave mixing in the resonant cavity. As discussed above, since the pump energies are above those expected in the photon pair regime, the apparatus is operated in the "above threshold regime," where undesirable nonlinear effects such as dynamical self-phase modulation and dynamical cross-phase modulation are induced on the first and second pump light pulses propagating within the resonant cavity.

To mitigate those undesirable effects, there are proposed two solutions. A first one in which the first and second pulse durations of the first and second pump light pulses are longer than pulse durations generally used in the generation of squeezed light in the photon pair regime. Although some may find this approach counterintuitive, it was found that by having the first and second pulse durations greater than a cavity decay time of the resonant cavity, the generated squeezed state can be produced with a Schmidt number Kₙ lower than those obtained in the below threshold, photon pair regime, and by doing so the efficiency of the pumping can be greatly increased, leading to the generation of many photon pairs simultaneously. Additionally or alternatively, the second solution involves a step of chirping the first and second pump light pulses so that spectral detuning terms associated with dynamical self-phase modulation and dynamical cross-phase modulation at least partially, and sometimes fully, cancel each other, once again allowing for more efficient pumping and multiple simultaneous photon pair generation.

In accordance with a first aspect of the present disclosure, there is provided an apparatus for squeezed light generation, the apparatus comprising: an optical medium having a third-order nonlinearity, the optical medium including a resonant cavity; a first pump light source in optical communication with the resonant cavity and propagating first pump light pulses therealong, the first pump light pulses having a first pump pulse energy; and a second pump light source in optical communication with the resonant cavity and propagating second pump light pulses therealong, the second pump light pulses having a second pump pulse energy; wherein the first and second pump pulse energies are greater than an energy threshold associated with a photon pair regime, the first and second pump light pulses generating a signal light beam in a squeezed state of light via four-wave mixing in the optical medium, said generating including inducing of at least one of dynamical self-phase modulation and dynamical cross-phase modulation on the first and second pump light pulses within the optical medium.

Further in accordance with the first aspect of the present disclosure, the first light pulses can for example have a first pulse duration and the second light pulses have a second pulse duration, at least one of the first pulse duration and the second pulse duration greater than a photon pair regime duration threshold associated with pump pulse durations used in generating squeezed light in the photon pair regime.

Still further in accordance with the first aspect of the present disclosure, the resonant cavity can for example have a propagation length defining a cavity decay time, at least one of the first pulse duration and the second pulse duration greater than the cavity decay time of the resonant cavity.

Still further in accordance with the first aspect of the present disclosure, the at least one of the first pulse duration and the second pulse duration can for example be greater than the cavity decay time by a factor of one or above, preferably by a factor of five or greater, and most preferably by a factor of ten or greater.

Still further in accordance with the first aspect of the present disclosure, the squeezed state of light of the signal light beam can for example have a Schmidt number Kₙ below a reference Schmidt number K_{n,ref} generally associated with the photon pair regime.

Still further in accordance with the first aspect of the present disclosure, the Schmidt number Kₙ can for example be below 1.09.

Still further in accordance with the first aspect of the present disclosure, at least one of the first pump pulse energy and the second pump pulse energy can for example be greater than 30 pJ, preferably greater than 50 pJ and most preferably greater than 70 pJ.

Still further in accordance with the first aspect of the present disclosure, the first pump light pulses can for example have a first non-zero chirp factor and the second pump light pulses have a second non-zero chirp factor, the first chirp factor and the second chirp factor suppressing at least one of the dynamical self-phase modulation and the dynamical cross-phase modulation.

Still further in accordance with the first aspect of the present disclosure, the first non-zero chirp factor and the second non-zero chirp factor can for example be approximately equal to one another.

Still further in accordance with the first aspect of the present disclosure, the optical medium can for example include at least one of silicon nitride (SiₓN_{y}), indium phosphide (InP), silicon (Si), silicon oxide (SiO₂), and aluminum gallium arsenide (AlGaAs).

Still further in accordance with the first aspect of the present disclosure, the resonant cavity can for example be a first resonant cavity, the apparatus can for example further comprise a second resonant cavity in optical communication with the first resonant cavity, the second resonant cavity suppressing parasitic fields within the first cavity ring.

In accordance with a second aspect of the present disclosure, there is provided a method for generating squeezed light, the method comprising: optically coupling a first pump light source and a second pump light source with an optical medium having a third-order nonlinearity, the optical medium including a resonant cavity; the first pump light source propagating first pump light pulses into the resonant cavity via said coupling, the first pump light pulses having a first pump pulse energy; and the second pump light source propagating second pump light pulses into the resonant cavity via said coupling, the second pump light pulses having a second pump pulse energy, the first and second pump pulse energies greater than an energy threshold associated with a photon pair regime of the optical medium; and the first and second pump light pulses generating a signal light beam in a squeezed state of light via four-wave mixing in the optical medium, said generating including inducing at least one of dynamical self-phase modulation and dynamical cross-phase modulation on the first and second pump light pulses within the optical medium.

Further in accordance with the second aspect of the present disclosure, the first light pulses can for example have a first pulse duration and the second light pulses have a second pulse duration, the method can for example further comprise setting at least one of the first pulse duration and the second pulse duration greater than a photon pair regime duration threshold associated with pump pulse durations used in generating squeezed light in the photon pair regime.

Still further in accordance with the second aspect of the present disclosure, the resonant cavity can for example have a propagation length defining a cavity decay time, at least one of the first pulse duration and the second pulse duration greater than the cavity decay time of the resonant cavity.

Still further in accordance with the second aspect of the present disclosure, the at least one of the first pulse duration and the second pulse duration can for example be greater than the cavity decay time by a factor of one or above, preferably by a factor of five or greater, and most preferably by a factor of ten or greater.

Still further in accordance with the second aspect of the present disclosure, the squeezed state of light of the signal light beam can for example have a Schmidt number Kₙ below a reference Schmidt number K_{n,ref} generally associated with the photon pair regime.

Still further in accordance with the second aspect of the present disclosure, the Schmidt number Kₙ can for example be below 1.09.

Still further in accordance with the second aspect of the present disclosure, at least one of the first pump pulse energy and the second pump pulse energy can for example be greater than 10 pJ, preferably greater than 20 pJ and most preferably greater than 30 pJ.

Still further in accordance with the second aspect of the present disclosure, the method can for example further comprise chirping the first and second pump light pulses prior to said coupling. In this latter case, the first pump light pulses have a first non-zero chirp factor and the second pump light pulses have a second non-zero chirp factor. The first chirp factor and the second chirp factor can for example suppress at least one of the dynamical self-phase modulation and the dynamical cross-phase modulation.

Still further in accordance with the second aspect of the present disclosure, the first non-zero chirp factor and the second non-zero chirp factor can for example be approximately equal to one another.

Still further in accordance with the second aspect of the present disclosure, the resonant cavity is a first resonant cavity, the optical medium can for example further comprise a second resonant cavity in optical communication with the first resonant cavity, the second resonant cavity suppressing parasitic fields within the first cavity ring. Within the context of this application, the first resonant cavity may also be referred to as main resonant cavity, and the second resonant cavity may also be referred to as auxiliary cavity.

In accordance with a third aspect of the present disclosure, there is provided an apparatus for squeezed light generation, the apparatus comprising: an optical medium having a third-order nonlinearity, the optical medium including a resonant cavity; a first pump light source in optical communication with the resonant cavity and propagating first pump light pulses therealong; and a second pump light source in optical communication with the resonant cavity and propagating second pump light pulses therealong; wherein the first light pulses have a first pulse duration and the second light pulses have a second pulse duration, at least one of the first pulse duration and the second pulse duration greater than a photon pair regime duration threshold.

Further in accordance with the third aspect of the present disclosure, the first pump light pulses can for example have a first pump pulse energy and the second pump light pulses can for example have a second pump pulse energy.

Still further in accordance with the third aspect of the present disclosure, the first and second pump pulse energies can for example be greater than an energy threshold associated with a photon pair regime.

Still further in accordance with the third aspect of the present disclosure, the first pump light pulses and the second pump light pulses can for example generate a signal light beam in a squeezed state of light via four-wave mixing in the optical medium, said generating including inducing at least one of dynamical self-phase modulation and dynamical cross-phase modulation on the first pump light pulses and on the second pump light pulses within the optical medium.

In accordance with a fourth aspect of the present disclosure, there is provided an apparatus for squeezed light generation, the apparatus comprising: an optical medium having a third-order nonlinearity, the optical medium including a resonant cavity; a first pump light source in optical communication with the resonant cavity and propagating first pump light pulses therealong; and a second pump light source in optical communication with the resonant cavity and propagating second pump light pulses therealong; wherein the first pump light pulses have a first non-zero chirp factor and the second pump light pulses have a second non-zero chirp factor, the first chirp factor and the second chirp factor suppressing at least one of dynamical self-phase modulation and dynamical cross-phase modulation in the first and second pump light pulses within the optical medium.

Further in accordance with the fourth aspect of the present disclosure, the first pump light pulses can for example have a first pump pulse energy and the second pump light pulses can for example have a second pump pulse energy.

Still further in accordance with the fourth aspect of the present disclosure, the first and second pump pulse energies can for example be greater than an energy threshold associated with a photon pair regime.

Still further in accordance with the fourth aspect of the present disclosure, the first pump light pulses and the second pump light pulses can for example generate a signal light beam in a squeezed state of light via four-wave mixing in the optical medium, said generating including inducing at least one of dynamical self-phase modulation and dynamical cross-phase modulation on the first pump light pulses and on the second pump light pulses within the optical medium.

All technical implementation details and advantages described with respect to a particular aspect of the present invention are self-evidently mutatis mutandis applicable for all other aspects of the present invention.

Many further features and combinations thereof concerning the present improvements will appear to those skilled in the art following a reading of the instant disclosure.

### DESCRIPTION OF THE FIGURES

In the figures,
Fig. 1 is a schematic view of an example of an apparatus for generating squeezed light, shown with first and second pump light sources generating first and second pump light pulses into an optical cavity having a resonant cavity, in accordance with one or more embodiments;
Fig. 2 is a graph showing pulse energy for the first and second pump light pulses of Fig. 1, in accordance with one or more embodiments;
Fig. 3 is a schematic view of a dual-pump (degenerate) spontaneous four-wave mixing occurring in the resonant cavity of Fig. 1, wherein two pump photons in the resonances labelled by R and B are annihilated and two signal photons are created in the resonance labelled by G, in accordance with one or more embodiments;

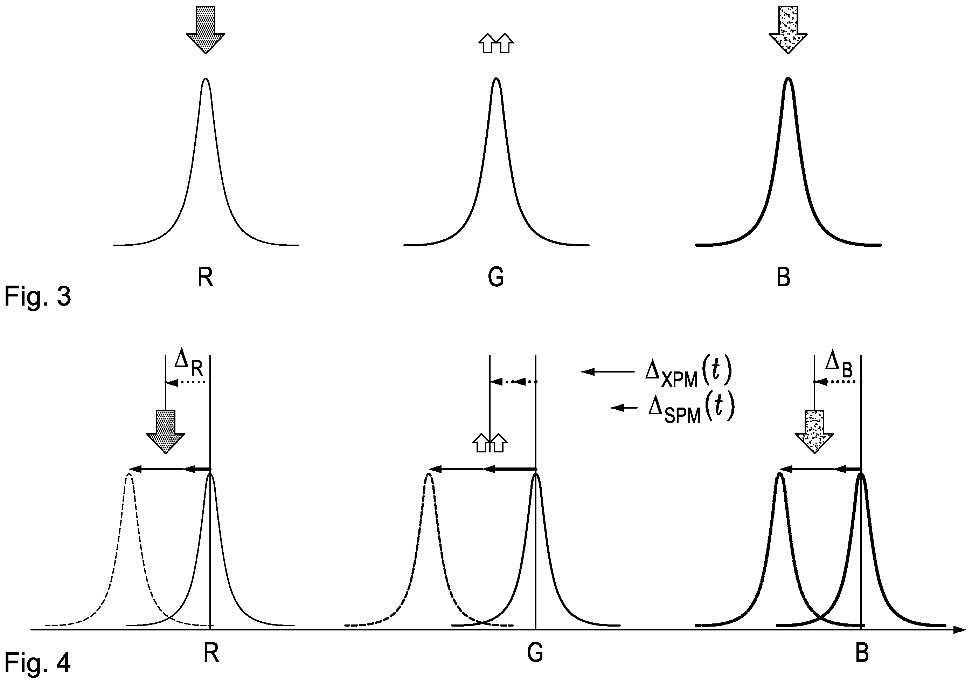

Fig. 4 is a schematic view of a pumping scheme typical of an exemplary three resonance system, in which pumps are located at the resonances R and B depicted by the large downward arrows and the signal is generated at the resonance G denoted by the two small upward point arrows, in which each pump experiences a dynamic self-phase modulation as well as a cross-phase modulation from the opposite pump amplitude denoted by denoted by Δ_{SPM}(t) and Δ_{XPM}(t) respectively, in which the signal experiences cross-phase modulation from both pumps and is therefore shifted more to the left relative to the pumps at the maximum point, and in which the generation of photon pairs is shifted as the pumps are detuned to compensate for the phase modulation, in accordance with one or more embodiments;
Fig. 5 includes graphs showing pump profiles before (left), in (center), and after (right) the resonant cavity of Fig. 1, in accordance with one or more embodiments;
Fig. 6 includes graphs showing a norm of the joint-temporal amplitude (left), a norm of the M moment (center), and a norm of the N moment (right), all before loss, in accordance with one or more embodiments;
Fig. 7 includes graphs showing squeezing amplitudes (top left), the values *mₗ* and *nₗ* scaled by their maximum value on a dB scale (top right, and bottom left), and the squeezing and anti-squeezing also on a dB scale (bottom right), in accordance with one or more embodiments;
Fig. 8 includes graphs showing squeezing before loss (left), and Schmidt number *K*_{N} (right) for different pumping levels and different normalized pump pulse durations *T*/*τ,* in accordance with one or more embodiments;
Fig. 9 includes graphs showing squeezing before loss (left), Schmidt number *K*_{N} (center), and Schmidt number *K*_{N} with a zoomed in y-axis (right) for different pumping levels and different normalized pump pulse durations *T*/*τ,* in accordance with one or more embodiments;
Fig. 10 includes graphs showing squeezing before loss (left), and Schmidt number *K*_{N} (right) as a function of Δ*_{com}* for normalized pump pulse durations of *T*/*τ* of 4 and 10 at a pump energy of 70 pJ, in accordance with one or more embodiments;
Fig. 11 includes graphs showing temporal traces of the joint-temporal amplitude (top left), the M moment (top center), the N moment (top right), the diagonal contribution to the joint temporal amplitude (bottom left), the pump amplitudes in the resonant cavity (bottom center), and the diagonal contribution of the N moment with its first eigenmode (bottom right) for a normalized pump pulse duration of *T*/*τ =* 4, in accordance with one or more embodiments;
Fig. 12 includes graphs showing temporal traces of the joint-temporal amplitude (top left), the M moment (top center), the N moment (top right), the diagonal contribution to the joint temporal amplitude (bottom left), the pump amplitudes in the resonant cavity (bottom center), and the diagonal contribution of the N moment with its first eigenmode (bottom right) for a normalized pump pulse duration of *T*/*τ =* 10, in accordance with one or more embodiments;
Fig. 13 is a graph showing the Schmidt number *K*_{N} as a function of pump pulse energy for different pump pulse durations, in accordance with one or more embodiments;
Fig. 14 is a graph showing the photon number as a function of pump pulse energy for different pump pulse durations, in accordance with one or more embodiments;
Fig. 15 includes graphs showing the Schmidt number *K*_{N} and the photon number for higher pump pulse energies, in accordance with one or more embodiments;
Fig. 16 includes graphs showing pump common detuning as a function of the chirp factor for four pump energies of 20, 40, 60 and 80 pJ for a normalized pulse duration of *T*/*τ = 2, Qᵢₙₜ =* 10M and *η* = 0.95, with the thick curves denoting an optimum detuning for each value of the chirp factor and the stars denoting the global maximum for each graph, in accordance with one or more embodiments;
Fig. 17 includes graphs showing the maximum photon number in the resonant cavity in a dual-pump configuration (top row) and the corresponding squeezing (bottom row) as a function of the chirp factor for different pump energies, in accordance with one or more embodiments; and
Fig. 18 is a flow chart of an example of a method for generating squeezed light, in accordance with one or more embodiments.

### DETAILED DESCRIPTION

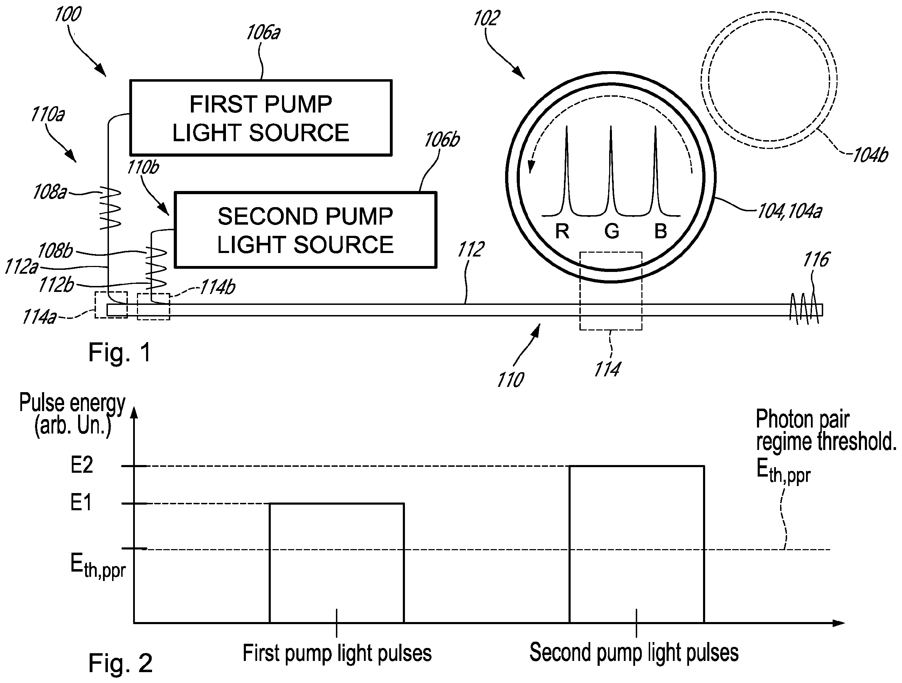

Fig. 1 shows an example of an apparatus 100 for squeezed light generation, in accordance with an embodiment. As depicted, the apparatus 100 has an optical medium 102 which has a third-order nonlinearity (a third-order optical susceptibility, equivalently). Examples of material exhibiting a third-order nonlinearity can include, but are not limited to, silicon nitride (SiₓN_{y}), indium phosphide (InP), silicon (Si), silica (SiO₂), lithium niobate (LiNbO₃), silicon oxide (SiO₂), aluminum gallium arsenide (AlGaAs), and the like. In some preferred embodiments, the optical medium 102 includes silicon nitride, which is widely used in optical communications (e.g., as waveguides). Therefore, the resulting apparatus 100 for squeezed light generation can be highly compatible with existing optical technologies and can be readily constructed on a mass scale.

It is intended that the optical medium 102 can include one or more resonant cavities 104, depending on the embodiment. In this specific embodiment, the optical medium 102 includes a main resonant cavity 104a and an auxiliary resonant cavity 104b coupled to one another in the depicted embodiment. Both the main resonant cavity 104a and the auxiliary resonant cavity 104b are provided in the form of a ring cavity in this example. However, in some other embodiments, either one or both of the main and auxiliary resonant cavities 104a and 104b can be provided in the form of a spiral cavity or a racetrack cavity, to name only a few other examples. As known in the art, the use of the auxiliary resonant cavity 104b can help suppress auxiliary resonances occurring within the optical medium 102. However, as the auxiliary resonance 104b is only an option in this disclosure, the main ring cavity 104a will be referred to as "the resonant cavity 104" in the following disclosure.

As depicted, the apparatus 100 has a first pump light source 106a and a second pump light source 106b which are independent from one another. As illustrated, the first and second pump light sources 106a and 106b are configured for propagating corresponding pump light pulses along the optical medium. More specifically, the first pump light source 106a propagates first pump light pulses 108a along the resonant cavity 104 whereas the second pump light source 106b propagates second pump light pulses 108b along the resonant cavity 104. It is noted that in embodiments where more than one resonant cavity is used, the first and second pump light pulses 108a and 108b are propagated into the optical medium 102, and as a result in the resonant cavities 104a, 104b, ..., 104i.

The first and second pump light sources 106a and 106b can include semiconductor lasers, fiber-based lasers, solid-state lasers, light emitting diodes (LEDs), or any other appropriate type of pump light source. For instance, the first and second pump light sources 106a and 106b are configured for emitting a corresponding pulsed pump light beam each having a corresponding frequency/wavelength, and corresponding pulse parameters including, but not limited to, a pulse duration, a peak intensity, a pulse energy, a chirp factor, and the like. In some embodiments, the output frequency of the first pump light source 106a and/or the second pump light source 106b can be tunable so as to change a squeezing factor of a signal light beam 116 outputted from the apparatus 100. In some embodiments, the power of the first pump light source 106a and/or the second pump light source 106b can be tunable so as to change the squeezing factor of the signal light beam 116. Additionally or alternately, the relative phase between the first pump light source 106a and the second pump light source 106b can be tunable so as to change a phase of the signal light beam 116. The first and second pump light sources 106a and 106b may be controlled via one or more controllers communicatively coupled to the first and second pump light sources 106a and 106b.

The apparatus 100 can include one or more waveguides which are used to optically couple the first and second pump light sources 106a and 106b to the optical medium 102 via one or more optical coupling assemblies, for instance. As shown, the apparatus 100 has a main coupling assembly 110 including a waveguide 112 which is optically coupled to the optical medium 102 via an optical coupler 114. Each pump light sources 106a, 106b is coupled to the waveguide 112 via a corresponding coupling assembly 110a, 110b. Each coupling assembly 110a, 110b typically includes a corresponding waveguide 112a, 112b and a corresponding optical coupler 114a, 114b. The type of optical coupler can vary from one embodiment to another. Examples of such optical couplers can include, but are not limited to, a directional coupler, a racetrack coupler, a point coupler, a pulley coupler, to name a few examples. In some embodiments, the apparatus 100 can be constructed with bulk and fiber-based optical elements. For example, the optical medium 102 can be included in a fiber and the waveguide 112 can include another fiber. In these embodiments, the optical coupler 114 can include one or more fiber couplers. In some embodiments, the apparatus 100 can be constructed on an integrated nanophotonic platform. For example, the first pump light source 106a, the second pump light source 106b, the optical medium 102 (including the resonant cavity 104), and the waveguide 112 can be fabricated on the same semiconductor substrate, thereby forming an integrated apparatus for squeezed light generation. In some implementations, the optical medium 102 and the waveguide 112 can include silicon nitride surrounded by silicon dioxide. In embodiments where the apparatus 100 is based on silicon nitride, the frequency/wavelength of the first and second pump light sources 106a and 106b is compatible with existing technology and infrastructure, such as the telecom C band around 1550 nm. However, any other suitable spectral region of the electromagnetic spectrum can be envisaged, depending on the optical components and materials used. Quality factors of micro-resonators in such platforms can readily exceed one million, in conjunction with small mode volumes and high transverse confinement providing nonlinear parameters in excess of 1 W⁻¹m⁻¹.

Being operated in pulsed regime, the first and second pump light sources 106a and 106b can provide pumping levels to the optical medium 102, and the resonant cavity 104, which are in the above threshold regime. The first pump light pulses have a first pump pulse energy E1 whereas the second pump light pulses have a second pump pulse energy E2. Depending on the embodiment, the first and second pump pulse energy E1 and E2 can exceed 30 pJ per pulse, preferably 50 pJ per pulse, and most preferably 70 pJ per pulse. Depending on the embodiment, the first and second pump pulse energies E1 and E2 can be similar (or dissimilar) to one another. However, as will be described below, both the first and second pump pulse energies E1 and E2 are above an energy threshold generally associated with the photon pair regime. For instance, in the context of a typical silicon nitride apparatus, the energy threshold E_{th,ppr} can be range between about 10 and 30 pJ per pulse. In other words, the first and second pump pulse energies E1 and E2 of the first and second pump light pulses 108a and 108b are greater than an energy threshold E_{th,ppr} associated with a photon pair regime of the resonant cavity 102. As such, the first and second pump light pulses 108a and 108b generate the signal light beam 116 in a squeezed state of light via four-wave mixing in the optical medium 102, which is ultimately outputted from the apparatus 100 from the waveguide 112, for instance. In some embodiments, the squeezed state of light of the signal light beam 116 is a single mode squeezed state.

As the resonant cavity 102 is pumped above the energy threshold (hereinafter referred to as the "above threshold regime"), undesirable nonlinear effects such as dynamical self-phase modulation and dynamical cross-phase modulation can act on the first and second pump light pulses 108a and 108b within the resonant cavity 102. In the above threshold regime, multiple photon pairs are simultaneously created within the resonant cavity 102. The presence of dynamical self-phase modulation and dynamical cross-phase modulation within the resonant cavity 102 tends to reduce the overall pumping efficiency in addition to shifting the pump resonances undesirably. As a result, the above threshold regime is seldom documented in the literature. Indeed, this regime is mostly referred as the theoretical pumping limit, which is not to be exceeded. It is noted that the adverse effects of the dynamical self-phase modulation and dynamical cross-phase modulation are generally neglected in embodiments where the resonant cavity 102 is operated below threshold, i.e., when the resonant cavity is pumped below the energy threshold E_{th,ppr} associated with the photon pair regime. In the photon pair regime, the pumping of the resonant cavity 102 is much weaker and as a result as only one photon pair at once in response of the pumping. In these below threshold scenarios, some parasitic noise existing in the resonant cavity 102 can be addressed using known techniques for instance by coupling an auxiliary resonant cavity 104b to the main resonant cavity 104a.

In any case, this disclosure aims at operating the apparatus 110 not only in a dual-pump configuration, but in a dual-pulsed-pump configuration, in which the two pump light sources 106a and 106b are pulsed pump light sources. Using two pulsed pump light sources, the apparatus 100 can easily be pumped in the above threshold regime, such as emphasized in Fig. 2. However, since undesirable dynamical self-phase modulation and dynamical cross-phase modulation are generated within the optical medium 102, the present disclosure further suggests two mutually independent solutions to address these adverse effects: the first one relates to pulse duration of the first and second pump light pulses 108a and 108b whereas the second one relates to the pre-chirping of the first and second pump light pulses 108a and 108b. As these solutions are far from trivial, the following paragraphs aim at establishing the theoretical foundations from which these solutions originate.

A main interest of the present disclosure is directed to the generation of single-mode squeezed light in integrated photonic devices such as SiN-based resonant cavities. To generate squeezed light using a third-order nonlinearity, a "dual-pump" configuration, where two pumps labelled by *R* and *B* are injected into the resonant cavity, must be used. If the pumps are chosen symmetrically on either side of the resonance corresponding to the desired squeezed field labelled by *G* - hence forth referred to as the signal S - photon pairs are spontaneously created if they satisfy energy and moment conservation, such as shown in Fig. 3. If the bosonic creation and annihilation operators are identified for the three resonances of interest, then the generation of photon pairs is modelled by the Hamiltonian:
${H}_{SFWM} = Λ {a}_{R}^{†} {a}_{B}^{†} {a}_{G} {a}_{G} + H . c . ,$ (1)
where A is to be defined and sets the strength of the nonlinear process, and *H. c.* is the Hermitian conjugate. Given that this process is third-order and relies on four fields, the frequencies involved can be very close to each other making the phase-matching constraints "easy" to satisfy.

Unfortunately, the third-order nature of the interaction also comes with many added complications. Other nonlinear interactions involving the three fields are also possible that can complicate the pumping scheme and efficiency. For example, self- and cross-phase modulation, which quantum mechanically corresponds to the annihilation and creation of two photons within the same or different frequency range are always present. For sufficiently strong pumping fields, these contributions effectively shift the position of the resonances and can decrease the pumping efficiency. Similar to spontaneous four-wave mixing, the effects due to self- and cross-phase modulation are modelled with the Hamiltonian:
${H}_{SPM + XPM} = \frac{Λ}{2} {\sum }_{α , β = R , G , B} {a}_{α}^{†} {a}_{α}^{†} {a}_{β} {a}_{β} + H . c . ,$ (2)
where the *α* = *β* contributions corresponds to self-phase modulation and the rest correspond to cross-phase modulation terms.

At this point, the typical nonlinear processes that are usually modelled in silicon nitride resonant cavities have been outlined. Aside from these contributions, there is a whole "zoo" of four-wave mixing interactions that can occur in a dual pumped silicon nitride resonant cavity. Generally, the Hamiltonian that described *all* the four-wave mixing processes - including the ones already mentioned - is given by:
${H}_{NL} = \frac{Λ}{2} {\sum }_{α , β , μ , ν} {a}_{α}^{†} {a}_{β}^{†} {a}_{μ} {a}_{ν} + H . c . ,$ (3)
where the indices now vary over the resonances of the ring. Since phase matching in these structures is "easy" generally, all the terms contained in the above Hamiltonian will contribute to the dynamics. This subset of processes involving the signal resonance G can be extrapolated from equation (3), and although the apparatus and method disclosed therein can be applied to these more complex embodiments, the following examples focus on the generic, simpler embodiment involving the two pump R and B and the signal resonance *G*.

To combat parasitic processes in the ring resonant cavity, three tools may be deployed: pump detuning, the influence of dispersion, and auxiliary ring structures. Although these tools will not be described in detail in this disclosure, the simplest way to decrease the strength of parasitic is to symmetrically detune the pumps so that the only process that is energy conserving is the photon pair generation at *S*. However, it is known that this alone is not sufficient and further always leads to a decrease of pump efficiency. Aside from external knobs, the resonant structure itself can be tuned to have desired properties. One parameter which can be tuned is the dispersion characteristics of the ring resonant cavity which can add an asymmetry to the cavity resonances thereby creating a phase mismatch. Again the effects of dispersion are often limited and constrained by waveguide geometries and fabrication processes. Aside from tuning the ring itself, auxiliary structures in the form of other ring resonant cavities can also be used to effectively change the local dispersion properties of the ring and can be tuned in real time. This occurs through the interference effects between a ring coupled to an auxiliary ring where resonances can be "pushed" and "split" effectively removing the resonance at the location corresponding to the parasitic contribution.

Aside from the complications due to parasitic processes, even in the ideal case of a three resonance structure, the requirement that the output state be as close to pure as possible significantly restricts the parameter space in which one can operate. For the output state to be pure, it is required that most of the light "lost" from the ring is due to the coupling to the waveguide and not to other intrinsic sources of loss. This is quantified by the escape efficiency defined by:
${η}_{α} = \frac{{Γ}_{α}}{{\overline{Γ}}_{α}} = \frac{{Q}_{tot , α}}{{Q}_{ext , α}} = \frac{1}{1 + \frac{{Q}_{ext , α}}{{Q}_{int , α}}} ,$ (4)
which quantifies the percentage of light coupled out of the ring relative to the total loss rate. For the generated squeezed light to be as pure as possible, *η_{G}* → 1 is required so that the resonant cavity is very oversupplied. This clearly poses a problem if one considers Eq. (4) where to reach *η_{G}* → 1, $\frac{{Q}_{ext , α}}{{Q}_{int , α}} \to 0$ is required. In the limiting cases, this can be achieved in two ways, either. *Q_{int,α}* → ∞ and the intrinsic sources of loss are removed or *Q_{ext,α}* → 0 and the coupling between the waveguide and ring is made very strong. In reality, while fabrication process engineering is continuously improving, it is accepted that a ring resonant cavity will never be completely lossless and there will always have a finite intrinsic Q. This poses a problem for the generation efficiency because the total Q of the resonant cavity is related to the intrinsic Q and escape efficiency via Q*ₜₒₜ* = (1 *- η*)*Qᵢₙₜ,* so assuming a fixed *Qᵢₙₜ,* increasing the escape efficiency directly degrades the total Q of the resonant cavity and thus the generation rate. Thus, within the confines of limited intrinsic Qs, the generation of usable squeezed states is inherently inefficient.

To work in a significantly oversupplied regime, i.e., a dual-pumping regime stronger than the conventional photon-pair regime, such as described in the present disclosure, with access only to finite intrinsic Qs, one must develop alternative ways in which the generation efficiency can be increased while also maintaining the single-mode behaviour. To make matters worse significantly oversupplied resonances can also negatively impact the squeezing via the inclusion of spurious processes because the required amount of suppression may need to be larger to compensate the extended phase matching regions. To this end, two aspects of the pump pulses are explored, the pulse duration of the pump pulses and their chirp factors. Longer pulses are expected to be more efficient because their bandwidth is narrower and so more light can be coupled into the resonant cavity. As a bonus their phase matching range is also smaller which may be advantageous when combined with parasitic suppression techniques. On the other hand, longer pump pulses tend to lead to temporally impure states. In this disclosure, a trade-off between these two extremes is explored in the search for the "optimum" pulse duration that captures the best of both worlds.

As mentioned for strong pumping, the fields in the ring resonant cavity may experience resonance shifts due to self- and cross-phase modulation. This tends to decrease the pump efficiency because the pumps always need to be precompensate for these shifts, meaning the pumps are never set to be on resonance. Given that the resonance shifts on the pumps effectively "chirp" the pump fields, it is expected that if the phase of the pumps is "pre-chirped" to compensate for these phase modulations, they can be effectively removed from the dynamics. If possible, the pumps would effectively "follow" the resonance shifts, allowing them to be driven on resonance, increasing the overall efficiency of the squeezed light generation.

Although the improvements described in this disclosure are also applicable to N-resonance systems, it was found convenient to exemplarily model a three resonance system. The notation used above involving the labels *R, G, B* denotes an order of increasing frequency from left to right. Based on resonant cavity theory, the cavity operators must satisfy the following requirements:
$\begin{matrix}\left(\frac{d}{dt}+{iω}_{R}+{\overline{Γ}}_{R}\right) {a}_{R} = i Λ {a}_{R} {a}_{R} {a}_{R} + i 2 Λ \left({a}_{G}{a}_{G}+{a}_{B}{a}_{B}\right) {a}_{R} + i Λ {a}_{B} {a}_{G} {a}_{G} + {d}_{R <} \\ \left(\frac{d}{dt}+{iω}_{G}+{\overline{Γ}}_{G}\right) {a}_{G} = i Λ {a}_{G} {a}_{G} {a}_{G} + i 2 Λ \left({a}_{R}{a}_{R}+{a}_{B}{a}_{B}\right) {a}_{G} + i 2 Λ {a}_{G} {a}_{R} {a}_{B} + {d}_{G <} \\ \left(\frac{d}{dt}+{iω}_{B}+{\overline{Γ}}_{B}\right) {a}_{B} = i Λ {a}_{B} {a}_{B} {a}_{B} + i 2 Λ \left({a}_{R}{a}_{R}+{a}_{G}{a}_{G}\right) {a}_{B} + i 2 Λ {a}_{R} {a}_{G} {a}_{G} + {d}_{B <}\end{matrix}$ (5)
where the time dependence was removed from each operator. The general quantum dynamics given by Eq. (5) for the three resonance system is the standard result for a coupled mode theory where each quantum field experiences self- and cross-phase modulation (first and second contributions) as well as the four-wave mixing between fields. From this point, there are generally two regimes of interest one can consider, the below threshold regime (i.e., the photon pair regime) and the above threshold regime (i.e., the multiple photon pair regime), the latter of which being of principal interest in the present disclosure. For dynamics below threshold, the generation of photon pairs is spontaneous and weak and so back action of the generated field onto the pumps in terms of cross-phase modulation as well as pump depletion can be neglected. On the other hand, for systems above threshold where strong classical fields are generated, one must go beyond these approximations, the complexity of which explains why the improvements described in this disclosure are novel.

To clearly layout the dynamics the below threshold behaviour is first considered in the context where two pumps are incident to the ring and centered near the resonances *R* and *B* and photon pairs are generated in the resonance *G*, as shown in Fig. 4 as a schematic. This process is often referred to as the "dual-pump" or "degenerate" four-wave mixing in this disclosure. To work in the below threshold limit, the separate classical and quantum dynamics must be extracted from Eq. (5).

To take the below threshold limit of the pumps, each operator corresponding to the pump resonance is first replaced with its expectation value, that is for the real channel:
${ψ}_{R <} \left(t\right) \to \left〈{ψ}_{R <}\left(t\right)\right〉 ≡ {f}_{R} \left(t\right) {e}^{- i {\overline{ω}}_{R} t} , {ψ}_{B <} \left(t\right) \to \left〈{ψ}_{B <}\left(t\right)\right〉 ≡ {f}_{B} \left(t\right) {e}^{- i {\overline{ω}}_{B} t} ,$ (6)
and for the phantom channel:
${ϕ}_{R <} \left(t\right) \to \left〈{ϕ}_{R <}\left(t\right)\right〉 = 0 , {ϕ}_{B <} \left(t\right) \to \left〈{ϕ}_{B <}\left(t\right)\right〉 = 0$ (7)
to model that there is never any light incident from it. In setting the expectation value of the real channel, the pump fields were selected to be coherent states with a temporal amplitudes *f_{R}*(*t*) and *f_{B}*(*t*) centered at *ω̅_{R}* and *ω̅_{B}.* To properly normalize the pump functions, it is noted that:
$\frac{{E}_{J}}{{ℏω}_{J}} = {v}_{J} \int \left〈{ψ}_{J <}^{†}\left(t\right){ψ}_{J <}\left(t\right)\right〉 dt \to {v}_{J} \int {\left|{f}_{J}\left(t\right)\right|}^{2} dt ⇒ \int {\left|{f}_{J}\left(t\right)\right|}^{2} dt = \frac{{E}_{J}}{{v}_{J} {ℏω}_{J}}$ (8)
with *E_{J}* being the energy of each pump and *J = R, B.* For the ring operators corresponding to the classical fields, the same procedure was followed:
${a}_{R} \left(t\right) \to \left〈{a}_{R}\right〉 ≡ {A}_{R} \left(t\right) , {a}_{B} \left(t\right) \to \left〈{a}_{B}\left(t\right)\right〉 ≡ {A}_{B} \left(t\right) .$ (9)

With all the pump fields now classical fields of time, the back-action terms were dropped from the signal onto the pump fields since they are assumed to be negligible, then the pump equations reduce to:
$\begin{matrix}\left(\frac{d}{dt}+{\overline{Γ}}_{R}+i\left({ω}_{R}-Λ{\left|{A}_{R}\left(t\right)\right|}^{2}-2Λ{\left|{A}_{B}\left(t\right)\right|}^{2}\right)\right) {A}_{R} \left(t\right) = - {iγ}_{R}^{∗} {f}_{R} \left(t\right) {e}^{- i {\overline{ω}}_{R} t} \\ \left(\frac{d}{dt}+{\overline{Γ}}_{B}+i\left({ω}_{B}-Λ{\left|{A}_{B}\left(t\right)\right|}^{2}-2Λ{\left|{A}_{R}\left(t\right)\right|}^{2}\right)\right) {A}_{R} \left(t\right) = - {iγ}_{B}^{∗} {f}_{B} \left(t\right) {e}^{- i {\overline{ω}}_{B} t} .\end{matrix}$ (10)

Each pump field sees its own self- and cross-phase modulation, which for sufficiently high pump energies, effectively impose a dynamic shift onto the resonances to the left in frequency. In Fig. 4, it is made explicit that the cross-phase modulation is always twice the self-phase modulation as a result of the combinatorics of the ways in which the two fields can interact. Due to this asymmetry, for continuous-wave (CW) applications, normal dispersion is often desired to counteract this effect. The resulting pump equations are now described by a set of coupled, but classical differential equations that can be readily solved numerically.

For the resonance in which photon pairs are generated, the operator nature of the ring resonance and its driving term are kept, but the pumps are replaced with their expectation value. Since it is assumed that in the below threshold limit the average number of photons remains small, the self-phase modulation of the signal onto itself is neglected. However, the potentially strong cross-phase modulation from the pumps are kept; after applying these approximations, the signal operator dynamics reduce to:
$\left(\frac{d}{dt}+{\overline{Γ}}_{G}+i\left({ω}_{G}-2Λ\left({\left|{A}_{R}\left(t\right)\right|}^{2}+{\left|{A}_{B}\left(t\right)\right|}^{2}\right)\right)\right) {a}_{G} \left(t\right) = i 2 Λ {A}_{R} \left(t\right) {A}_{B} \left(t\right) {a}_{G}^{†} \left(t\right) + {d}_{G <} \left(t\right) .$ (11)

The equation for the signal operator in the ring is now linear in the operator *a_{G}*(*t*) and is in a form where it can be solved numerically using a Green function approach, for instance.

Before formally solving such dynamics, it is useful to switch to a rotating frame according to:
$\begin{matrix}{A}_{R} \left(t\right) = {\overline{A}}_{R} \left(t\right) {e}^{- i {\overline{ω}}_{R} t} , {d}_{R <} \left(t\right) = {\overline{d}}_{R <} \left(t\right) {e}^{- i {\overline{ω}}_{R} t} , \\ {A}_{B} \left(t\right) = {\overline{A}}_{B} \left(t\right) {e}^{- i {\overline{ω}}_{B} t} , {d}_{B <} \left(t\right) = {\overline{d}}_{B <} \left(t\right) {e}^{- i {\overline{ω}}_{B} t} , \\ {a}_{G} \left(t\right) = {\overline{a}}_{G} \left(t\right) {e}^{- i \frac{{\overline{ω}}_{R} + {\overline{ω}}_{B}}{2} t} , {d}_{G <} \left(t\right) = {\overline{d}}_{G <} \left(t\right) {e}^{- i \frac{{\overline{ω}}_{R} + {\overline{ω}}_{B}}{2} t} ,\end{matrix}$ (12)
so that the fast oscillations of each equation are removed. In the new frame of reference, the equations for the pumps and signal are given by:
$\left(\frac{d}{dt}+{\overline{Γ}}_{R}-i\left({Δ}_{R}+Λ{\left|{\overline{A}}_{R}\left(t\right)\right|}^{2}+2Λ{\left|{\overline{A}}_{B}\left(t\right)\right|}^{2}\right)\right) {\overline{A}}_{R} \left(t\right) = - {iγ}_{R}^{∗} {f}_{R} \left(t\right)$
$\left(\frac{d}{dt}+{\overline{Γ}}_{B}-i\left({Δ}_{B}+Λ{\left|{\overline{A}}_{B}\left(t\right)\right|}^{2}+2Λ{\left|{\overline{A}}_{R}\left(t\right)\right|}^{2}\right)\right) {\overline{A}}_{R} \left(t\right) = - {iγ}_{B}^{∗} {f}_{R} \left(t\right)$ (13) $\begin{matrix}\left(\frac{d}{dt}+{\overline{Γ}}_{G}-i\left(\frac{{Δ}_{r} + {Δ}_{R} + {Δ}_{B}}{2}+2Λ\left({\left|{\overline{A}}_{R}\left(t\right)\right|}^{2}+{\left|{\overline{A}}_{B}\left(t\right)\right|}^{2}\right)\right)\right) {\overline{a}}_{G} \left(t\right) = \\ i 2 Λ {\overline{A}}_{R} \left(t\right) {\overline{A}}_{B} \left(t\right) {\overline{a}}_{G}^{†} \left(t\right) + {\overline{d}}_{G <} \left(t\right)\end{matrix}$
where *Δ_{J} = ω̅_{J} - ω_{J}* (*J = R, B*) is set to be the detuning relative to the center of the resonance and Δ*ᵣ = ω_{R} + ω_{B} -* 2*ω_{G}* defines the offset from equally spaced resonances. In Fig. 4, the system of interest is schematically represented. As depicted, the pumps and signals experience the illustrated detuning and phase-modulation shifts. To avoid confusion with signs, it is noted that to compensate self-and cross-phase modulation, *Δ_{J}* < 0 is preferred which corresponds to the pump frequency being detuned to the left, as expected for phase-modulation contributions. The ring detuning Δ*ᵣ* also shows up in the dynamics of the signal. In the CW limit, as normal dispersion is desired, Δ*ᵣ* < 0 is preferred to compensate the extra phase modulation that the signal experiences. If instead a single-pump process was considered, anomalous dispersion would be targeted, which is typically required for frequency comb generation. As opposed to the CW limit, where all the dynamics take to their steady state values, in the pulsed regime the pump dependence and therefore the phase modulation the pumps and the signal experience all occurs dynamically. As a result, it is not obvious what the magnitude of the phase-modulation will be, nor what the optimum values of detuning should be set to optimize any quantity such as pump amplitude or the amount of squeezing. Due to this complexity, a detuning sweep is performed for each set of input parameters which are considered to obtain a glimpse of the parameters' respective impact.

To solve the dynamics of the quantum field, these dynamics are reformulated in matrix form according to:
$\frac{d}{dt} \left(\begin{matrix}{\overline{a}}_{G} \left(t\right) \\ {\overline{a}}_{G}^{†} \left(t\right)\end{matrix}\right) = M \left(t\right) \left(\begin{matrix}{\overline{a}}_{G} \left(t\right) \\ {\overline{a}}_{G}^{†} \left(t\right)\end{matrix}\right) + \left(\begin{matrix}{\overline{d}}_{G <} \left(t\right) \\ {\overline{d}}_{G <}^{†} \left(t\right)\end{matrix}\right)$ (14)
with:
$M \left(t\right) = \left(\begin{matrix}K \left(t\right) & F \left(t\right) \\ F * \left(t\right) & K * \left(t\right) ,\end{matrix}\right)$ (15)
where:
$K \left(t\right) = - {\overline{Γ}}_{G} + i \left(\frac{{Δ}_{r} + {Δ}_{R} + {Δ}_{B}}{2}+2Λ\left({\left|{\overline{A}}_{R}\left(t\right)\right|}^{2}+{\left|{\overline{A}}_{B}\left(t\right)\right|}^{2}\right)\right) , F \left(t\right) = 2 i Λ {\overline{A}}_{R} \left(t\right) {\overline{A}}_{B} \left(t\right)$ (16)

The dynamics are formally solved by specifying a Green function satisfying:
$\frac{d}{dt} G \left(t,t′\right) = M \left(t\right) G \left(t,t′\right)$ (17)
with the initial condition *G*(*t*₀*, t*₀) *=* 1 and is solved numerically using the Trotter-Suzuki expansion. With the Green function at hand, the full solution can be:
$\left(\begin{matrix}{\overline{a}}_{G} \left(t\right) \\ {\overline{a}}_{G}^{†} \left(t\right)\end{matrix}\right) = G \left(t, {t}_{0}\right) \left(\begin{matrix}{\overline{a}}_{G} \left({t}_{0}\right) \\ {\overline{a}}_{G}^{†} \left({t}_{0}\right)\end{matrix}\right) + {\int }_{{t}_{0}}^{t} G \left(t,t′\right) \left(\begin{matrix}{\overline{d}}_{G <} \left(t′\right) \\ {\overline{d}}_{G <}^{†} \left(t′\right)\end{matrix}\right) dt ′ ,$ (18)
where the first term is the initial condition and the second is due to the dynamics. Given the form of the matrix *M*(*t*)*,* or that Hermitian conjugate of the solution *a_{G}*(*t*) must agree with the solution to ${a}_{G}^{†} \left(t\right)$, the form of the Green function generally can be decomposed as:
$G \left(t, {t}_{0}\right) = \left(\begin{matrix}Q \left(t, {t}_{0}\right) & R \left(t, {t}_{0}\right) \\ R * \left(t, {t}_{0}\right) & Q * \left(t, {t}_{0}\right)\end{matrix}\right) ,$ (19)
which is used to expand the solution of the ring operator as:
${\overline{a}}_{G} \left(t\right) = Q \left(t, {t}_{0}\right) {\overline{a}}_{G} \left({t}_{0}\right) + R \left(t, {t}_{0}\right) {\overline{a}}_{G}^{†} \left({t}_{0}\right) + {\int }_{{t}_{0}}^{t} \left(Q\left(t,t′\right){\overline{d}}_{G <}\left(t′\right)+R\left(t,t′\right){\overline{d}}_{G <}^{†}\left(t′\right)\right) dt ′ .$ (20)
and provides a full solution for nonlinear dynamics inside the ring. Then, combining with:
${\overline{ψ}}_{G >} \left(t\right) = {\overline{ψ}}_{G <} \left(t\right) - \frac{{iγ}_{G}}{{v}_{G}} {\overline{a}}_{G} \left(t\right)$ (21)
the cavity field is related to the output waveguide, fully solving the quantum dynamics and thereby allowing the calculation of any quantity of interest. Note that in defining *ψ̅_{G>}*(*t*) and *ψ̅_{G<}*(*t*), the equations are moved to the same frame as *a̅_{G}*(*t*) given by Eq. (12); a similar equation is satisfied by the phantom waveguide.

At this point all the dynamics of the generation of squeezed light has been formally solved and quantities of interest can be calculated by combining Eqs. 20 and 21. In the following paragraphs, a focus is directed to the quantities of interest and more specifically to the amount of squeezing.

In determining the dynamics of the squeezed field, the strong classical physics was separated from the weak spontaneous process effectively "linearizing" the dynamics and in doing so restricting the only nonlinear generation process to be photon pair generation in the ring. For the moment, any loss due to the resonant cavity is neglected and it is assumed that all the light couples out of the resonant cavity and into the real waveguide. After a sufficiently long time so that all the light decays out of the ring and is in the waveguide, the resulting state will be a squeezed state. Putting ${\overline{a}}_{G >} \left(t\right) = \sqrt{v} {\overline{ψ}}_{G >} \left(t\right)$ for simplicity, a general squeezed state in terms of the output waveguide operators is given by:
$Ψ = {e}^{\int γ \left({t}_{1}, {t}_{2}\right) {\overline{a}}_{G >}^{†} \left({t}_{1}\right) {\overline{a}}_{G >}^{†} \left({t}_{2}\right) {dt}_{1} {dt}_{2} - H . c .}$ (22)
where *γ*(*t*₁*,t*₂) is set to be the complex but symmetric joint-temporal amplitude (JTA). As a result of working in the Heisenberg picture, direct access to the state is prevented and so the form of the joint temporal amplitude is not yet known. However, since the output squeezed state is a Gaussian state, it is completely specified by its displacement - which is zero for squeezed vacuum and so it is neglected - and the moments of the system that are defined by:
$\begin{matrix}{N}_{G}^{pure} \left({t}_{1}, {t}_{2}, {Γ}_{G}\right) = \left〈{\overline{a}}_{G >}^{†}\left({t}_{1}\right){\overline{a}}_{G >}\left({t}_{2}\right)\right〉 \\ {M}_{G}^{pure} \left({t}_{1}, {t}_{2}, {Γ}_{G}\right) = \left〈{\overline{a}}_{G >}\left({t}_{1}\right){\overline{ψ}}_{G >}\left({t}_{2}\right)\right〉 ,\end{matrix}$ (23)
which generally satisfy $\left({N}_{G}^{pure}\left({t}_{1}, {t}_{2}\right)\right) * = {N}_{G}^{pure} \left({t}_{2}, {t}_{1}\right)$ and ${M}_{G}^{pure} \left({t}_{1}, {t}_{2}\right) = {M}_{G}^{pure} \left({t}_{2}, {t}_{1}\right)$ . The moments are equivalent to the covariance matrix and thus fully describe the system. In defining the moments, the superscript "pure" is used and includes the dependence on Γ*_{G}* to explicitly denote that these correspond the state calculated from a system where the only loss of the resonant cavity is due to the output coupling to the channel waveguide. To calculate the moments, the calculations are performed in two ways allowing to determine the relationships between the moments and the joint temporal amplitude.

The first method starts by providing a Schmidt decomposition of the joint temporal amplitude given by:
$γ \left({t}_{1}, {t}_{2}\right) = {\sum }_{l} {r}_{l} {f}_{l} \left({t}_{1}\right) {f}_{l} \left({t}_{2}\right) ,$ (24)
where {*fₗ*(*t*)} form a complete set of orthonormal temporal mode functions or "Schmidt modes" and *rₗ* is the corresponding squeezing parameter of each Schmidt mode; such a decomposition can be determined by discretizing *γ*(*t*₁*,t*₂) and performing a Takagi decomposition. Defining the set of super-modes:
${A}_{l} = \int {f}_{l}^{*} \left(t\right) {\overline{a}}_{G >} \left({t}_{2}\right) dt$ (25)
**which** satisfies $\left[{A}_{k}, {A}_{l}^{†}\right] = {δ}_{kl}$, the moments are evaluated and equal to:
$\begin{matrix}{N}_{G}^{pure} \left({t}_{1}, {t}_{2}, {Γ}_{G}\right) = {\sum }_{l} {sinh}^{2} \left({r}_{l}\right) {f}_{l}^{*} \left({t}_{1}\right) {f}_{l} \left({t}_{2}\right) , \\ {M}_{G}^{pure} \left({t}_{1}, {t}_{2}, {Γ}_{G}\right) = {\sum }_{l} \frac{sinh \left(2{r}_{l}\right)}{2} {f}_{l} \left({t}_{1}\right) {f}_{l} \left({t}_{2}\right) .\end{matrix}$ (26)

It is found that the both moments are both specified by the squeezing parameter *rₗ* as well as the Schmidt modes *fₗ*(*t*). This is a result of the state being pure but will generally not be true in later sections. It will be convenient to set:
${n}_{l} = {sinh}^{2} \left({r}_{l}\right) , {m}_{l} = \frac{sinh \left(2{r}_{l}\right)}{2} ,$ (27)
which in this limit are the respective eigenvalues or singular values of the respective moments. Each *nₗ* is interpreted as the photon number in each Schmidt mode with the sum being the total number of photons in the state. It is observed that generally each *nₗ* tends to decrease the amount of squeezing of the state as it takes on larger values. On the other hand, *mₗ* does not have a simple physical understanding, but is also related to squeezing and tends to increase the amount of squeezing for larger values of *mₗ.* In this lossless regime, and given the moments, to specify the squeezed state, either the *N* or *M* moment (via an eigen or Takagi decomposition respectively) are decomposed to determine the squeezing parameters and temporal mode functions from which the joint temporal amplitude and therefore the state can be constructed. To do this, in practice, the moments can be calculated directly using the relationship between the input and output operators and the solved dynamics of the resonant cavity operators in the Heisenberg picture. After some computations: ${N}_{G}^{pure} \left({t}_{1}, {t}_{2}, {Γ}_{G}\right) = {Γ}_{G} R * \left({t}_{1}, {t}_{0}\right) R \left({t}_{2}, {t}_{0}\right) + {Γ}_{G} {\int }_{{t}_{0}}^{∞} θ \left({t}_{1}-t′\right) θ \left(\begin{matrix}{t}_{2} - \\ t ′\end{matrix}\right) R * \left({t}_{1},t′\right) 2 {Γ}_{G} R \left({t}_{2},t′\right) dt ′ ,$ (28)
and
$\begin{matrix}{M}_{G}^{pure} \left({t}_{1}, {t}_{2}, {Γ}_{G}\right) = {Γ}_{G} R \left({t}_{2}, {t}_{1}\right) θ \left({t}_{2}-{t}_{1}\right) - {Γ}_{G} Q \left({t}_{1}, {t}_{0}\right) R \left({t}_{2}, {t}_{0}\right) \\ - {Γ}_{G} {\int }_{{t}_{0}}^{∞} θ \left({t}_{1}-t′\right) θ \left({t}_{2}-t′\right) Q \left({t}_{1},t′\right) 2 {Γ}_{G} R \left({t}_{2},t′\right) dt ′ .\end{matrix}$ (29)

The loss is now included in the form of the phantom waveguide where the output state is more complicated. If the whole system described by both the real and phantom waveguide is considered, the resulting state is still pure, but now entangled over the two degrees of freedom, i.e., the two waveguides. In this situation, the full state remains Gaussian and can be described by the *N* and *M* moments but in terms of both the real and phantom waveguide operators. However, this cannot be the case in reality because the phantom waveguide is used to model loss and it is inaccessible. To model the real system, all phantom waveguide photons are treated as lost and therefore must trace over the phantom waveguide degree of freedom. After doing so, the output state is a lossy squeezed state or equivalently a squeezed thermal where the thermal and squeezed contributions are defined in terms of the squeezing "before loss" and the escape efficiency of the signal; as a result the state will no longer be a pure state after loss.

Instead of proceeding with the state corresponding to a squeezed thermal state, it will be much simpler to leverage the properties of Gaussian states. For a Gaussian state, tracing over a degree of freedom is equivalent to taking the subset of the covariance matrix - or equivalently the moments - around the degrees of freedom of interest. That is, the lossy squeezed state is also completely determined from the moments but calculated only from the output of the real channel in the same way as in the lossless case. Then, defining the moments in the same way, but now including loss in the calculation, the moments including loss are given by:
$\begin{matrix}{N}_{G} \left({t}_{1}, {t}_{2}\right) = \left〈{\overline{a}}_{G >}^{†}\left({t}_{1}\right){\overline{a}}_{G >}\left({t}_{2}\right)\right〉 \\ {M}_{G} \left({t}_{1}, {t}_{2}\right) = \left〈{\overline{a}}_{G >}\left({t}_{1}\right){\overline{ψ}}_{G >}\left({t}_{2}\right)\right〉 ,\end{matrix}$ (30)
which are related to the pure moments according to:
$\begin{matrix}{N}_{G} \left({t}_{1}, {t}_{2}\right) = {η}_{G} {N}_{G} pure \left({t}_{1}, {t}_{2}, {\overline{Γ}}_{G}\right) \\ {M}_{G} \left({t}_{1}, {t}_{2}\right) = {η}_{G} {M}_{G} pure \left({t}_{1}, {t}_{2}, {\overline{Γ}}_{G}\right) .\end{matrix}$ (31)

It is understood that the case including loss is the generation of a pure squeezed state that decays into a fictitious waveguide with a total decay rate of the combined real and phantom waveguide given by Γ̅*_{G}*; the squeezed light is then coupled into the real waveguide with an escape efficiency *η_{G}.* Reference is now made to the squeezed state and its properties like the amount of squeezing "before loss" as being derived from the moments, but with the escape efficiency "backed out." In the three resonance system, this may correspond to the pure moments and to a pure squeezed state. Although the squeezing and photon statistics can change under the inclusion of loss, in the three resonance system, loss can affect each temporal mode in the same way and so the basis functions that decompose the pure moments can also decompose the moments after loss.

Although the true output state is specified by the moments *N_{G}*(*t*₁*,t*₂) and *M_{G}*(*t*₁*,t*₂), separating out the dynamics of the state between the total and "before loss" contributions can often be useful in analyzing trends in the amount of squeezing as one varies different parameters. On the other hand, some properties of the squeezed light can be independent of loss, mainly the Schmidt number(s).

Attention is now turned to the main quantity of interest: the amount of squeezing generated in the state. For a pulsed source, squeezing is typically measured via homodyne detection where a strong pulsed local oscillator (LO) interferes on a balanced beam splitter and then both output arms are measured by two photo detectors. Through this process the squeezed pulse and LO interfere and one effectively measures the quadrature of the field within the temporal mode of the LO. In practice, this means there is a freedom in choosing the temporal mode of the local oscillator.

To model the detection, the temporal mode function *χ*(*t*) is considered and the following supermode is defined:
${A}_{χ} = \int χ * \left(t\right) {\overline{a}}_{G >} \left(t\right) dt .$ (32)

If the temporal mode *χ*(*t*) is square normalized then the usual commutation relation $\left[{A}_{χ}, {A}_{χ}^{†}\right] = 1$ holds. Notice that from the definition of the supermode, the following relations are obtained:
$\begin{matrix}{n}_{χ} ≡ \left〈{A}_{χ}{A}_{χ}^{†}\right〉 = \int {dt}_{1} {dt}_{2} χ \left({t}_{1}\right) {N}_{G} \left({t}_{1}, {t}_{2}\right) χ * \left({t}_{2}\right) \\ {m}_{χ} ≡ \left〈{A}_{χ}{A}_{χ}\right〉 = \int {dt}_{1} {dt}_{2} χ * \left({t}_{1}\right) {M}_{G} \left({t}_{1}, {t}_{2}\right) χ * \left({t}_{2}\right) ,\end{matrix}$ (33)
and so correlations functions of the supermode 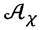 can be determined in terms of the overlap of the moments with the chosen temporal mode profile. In the above definition of *n_{χ}* and *m_{χ},* the subscript is used to explicitly denote that the values calculated can depend on the specific temporal mode chosen. Then, in the usual way, the "quadrature operators" are constructed from the supermodes according to:
$X = \frac{1}{\sqrt{2}} \left({A}_{G}^{†}+{A}_{G}\right) , P = \frac{i}{\sqrt{2}} \left({A}_{G}^{†}-{A}_{G}\right) ,$ (34)
and in terms of the above defined quantities the quadrature variances are:
${V}_{x} ≡ \left〈{X}^{2}\right〉 = {n}_{χ} + Re \left({m}_{χ}\right) + \frac{1}{2} {V}_{p} ≡ \left〈{P}^{2}\right〉 = {n}_{χ} - Re \left({m}_{χ}\right) + \frac{1}{2} .$ (35)

Generally the squeezing and anti-squeezing defined by the quadrature variables *X* and *P* can depend on the phase of the temporal mode and the squeezed pulse. When the two phases are aligned or anti-aligned, the variances can take their maximum and minimum values such that *Re*(*m_{χ}*) = ∓|*m_{χ}*|, which can correspond to the squeezing and anti-squeezing. Then, appropriately choosing the phase, the squeezing and anti-squeezed for the lossy squeezed state are respectively given by
${V}_{sq} = {n}_{χ} - \left|{m}_{χ}\right| + {V}_{0} , {V}_{asq} = {n}_{χ} + \left|{m}_{χ}\right| + {V}_{0} ,$ (36)
where *V*₀ = 1/2 denotes the vacuum variance. Here, it is observed that *n_{χ}* or the project of the *N* moment generally leads to less squeezing whereas the projection of the *M* moment can lead to more squeezing. This implies that if one wants to maximize the amount of measured squeezing, the LO should be optimized to maximize the overlap with the M moment and minimize the overlap with the *N* moment.

Since a lossy squeezed state is to be dealt with, the squeezing and anti-squeezing variances calculated may not satisfy the minimum uncertainty bound. Using the relation between the moments before loss and after loss, it is found that *n_{χ}* and *m_{χ}* are related to their values before loss is applied to the state in a similar way by ${n}_{χ} = {η}_{G} {n}_{χ}^{pure}$ and ${m}_{χ} = {η}_{G} {m}_{χ}^{pure}$. Then, after some algebra, the following relation can be found:
${V}_{sq} = {η}_{G} {V}_{sq}^{pure} + \left(1-{η}_{G}\right) {V}_{0} , {V}_{asq} = {η}_{G} {V}_{asq}^{pure} + \left(1-{η}_{G}\right) {V}_{0} ,$ (37)
where ${V}_{sq}^{pure}$ and ${V}_{asq}^{pure}$ are defined in the same way as *V_{sq}* and *V_{asq},* but in terms of ${n}_{χ}^{pure}$ and ${m}_{χ}^{pure}$. The relationship between the squeezing before and after loss is identical to the squeezing after mixing in vacuum by a beam splitter with an amplitude transmission coefficient of $\sqrt{{η}_{G}}$, as is typically used to model loss. This result is expected because the coupling between the waveguide and ring is modelled as occurring at a single point, as is typically done for a beam splitter.

Calculating the squeezing is now equivalent to specifying the temporal mode function which in principle could be arbitrary chosen or optimized over a given metric. However, given that in this simpler three resonance system, the mode functions associated with either the joint temporal amplitude, *N* or *M* moment are all the same and so a natural choice is to choose *χ*(*t*) from the set {*fₗ*(*t*)}. Assuming the Schmidt amplitudes *rₗ* are organized in descending order, the first temporal mode is the most populated one. Then putting *χ*(*t*) *= f*₀(*t*), ${n}_{χ}^{pure} \to {n}_{0}$ and ${m}_{χ}^{pure} \to {m}_{0}$ and using various hyperbolic-trigonometric identities, the following is found:
${V}_{sq}^{pure} = {V}_{0} {e}^{- {r}_{0}} , {V}_{asq}^{pure} = {V}_{0} {e}^{2 {r}_{0}} ,$ (38)
which is the usual result for a single-mode pure squeezed state.

For a given temporal mode, calculating the squeezing has now been described. However, in practice, many temporal modes are required to describe the state which is usually undesirable and referred to as the temporal or spectral purity. For schemes involving heralded single photons or more exotic state preparation for quantum computation, one requires the joint temporal amplitude of the squeezed state to be separable, or, in other words, decomposable by a single temporal mode function. This can be crucial because PNR (Photon number resolving) detectors are not mode sensitive so if many temporal modes are present and a photon is detected, one cannot determine "which temporal mode" the photon came from. As a result the heralded state can be in a mixed state of all temporal modes and is thus not well determined for downstream information processing. In this exploration of squeezed states, it is thus required of them to be temporally (or equivalently spectrally) separable.

In the photon pair regime, the temporal separability is quantified by the "Schmidt number" of the JTA defined by:
${K}_{JTA} = \frac{{\left({\sum }_{l} {r}_{l}^{2}\right)}^{2}}{{\sum }_{l} {r}_{l}^{4}} ,$ (39)
and is interpreted as the inverse of the "average probability". If the joint-temporal amplitude is separable then *K_{JTA} =* 1, otherwise *K_{JTA} >* 1. In integrated optics, lots of effort has been spent trying to engineer *K_{JTA}* → 1 using methods that do not involve spectral filtering; some examples include using very short pump pulses or changing the Q factors of pumps and signal resonances, and using a "double pulse" for the pump. Unfortunately, these methods were found to often times reduce the overall efficiency of the generation of photon pairs.

In the limit of large squeezing, i.e., above threshold, it was found that *K_{JTA}* may not be the most useful quantity to calculate. By specifying the joint-temporal amplitude, the squeezed state is completely defined and all its properties can be calculated, but it was found that those properties are not always directly obvious from the joint-temporal amplitude itself. This may be expected because the joint-temporal amplitude lives "in the exponential" of the squeezed state and really describes the correlation of photon pairs and not the overall distribution of photons in a pulse of squeezed light. As already discussed, in any limit, all the properties of the squeezed state - such as the photon density or amount of squeezing - can be calculated from the *N* and *M* moments. Due to this fact, it is convenient to introduce two other "Schmidt numbers" defined by:
${K}_{N} = \frac{{\left({\sum }_{l} {n}_{l}\right)}^{2}}{{\sum }_{l} {n}_{l}^{2}} {K}_{M} = \frac{{\left({\sum }_{l} {m}_{l}\right)}^{2}}{{\sum }_{l} {m}_{l}^{2}} ,$ (40)
which are similar in form to *K_{JTA},* but are calculated from the eigenvalues/singular values of the respective *N* and *M* moment before loss (see Eq. (31) above). Of course, these quantities are not independent to each other since *nₗ* and *mₗ* both depend on *rₗ*; if the joint-temporal amplitude is exactly separable, *K_{JTA}* = 1 implies *K_{N} = K_{M} =* 1 and the moments are also exactly separable. Further, in the low squeezing limit for which *rₗ* ≪ 1, ${n}_{l} \to {r}_{l}^{2}$ and ${m}_{l} \to {r}_{l}^{2}$ so that *K_{JTA} = K_{N} ≈ K_{M}.* On the other hand, in the high squeezing limit it is noted that the three Schmidt numbers can be quite different from each other and that the separability of the joint-temporal amplitude is a sufficient, but not necessary condition for the separability of the squeezed state itself. Note that in the definition of the Schmidt numbers they are indeed independent of loss.

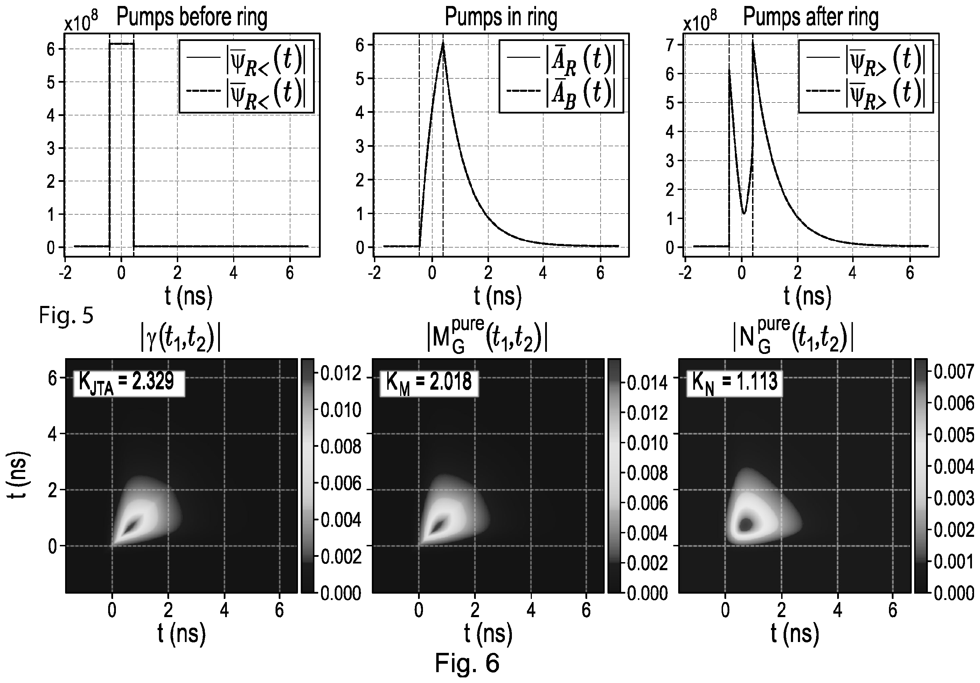

A simple example calculation that will detail most of the parameters one can work with is now presented. Consider a resonant cavity with a *Qᵢₙₜ* = 10M and *η* = 0.95 corresponding to *Qₜₒₜ* = 500k centered around 1550 nm. The resonances are set to be in the zero dispersion regime where they are equally spaced. As an example, the two pump functions are set to "top-hats" functions with a duration of 0.82 ns each containing 40 pJ of energy. The nonlinear coefficient is set to Λ = 2.9 Hz, typical for standard ring geometries. Fig. 5 plots the pumps before, in, and after the resonant cavity. In solving the dynamics, the effects of self-and cross-phase modulation are included, but the pump detunings from resonance are set to zero and thus not optimized in any way.

After calculating the pumps, the quantum dynamics were solved as outlined above. Fig. 6 shows the joint-temporal amplitude and moments as well as their corresponding Schmidt numbers all before loss. It is noted that the structure of *γ*(*t*₁,*t*₂) is similar to the *M* moment rather than the *N* moment due to the similarity in their decompositions (see Eqs. (24) and (26)). Further, it was found that *K_{JTA} > K_{M} > K_{N}* implying that the degree of separability for the joint-temporal amplitude is in general different than the degree of separability of the moments. This is a result of *nₗ* and *mₗ* scaling nonlinearly with the squeezing parameters *rₗ*. That is, given a *r*₀ sufficiently greater than *r*₁, because *mₗ* and *nₗ* involve hyperbolic functions they scale exponentially and it is possible for m₀ ≫ *m*₁ and *n*₀ >> *n*₁ leading to the moments being approximately separable even if the joint-temporal amplitude is not. Since the scaling of *mₗ* is less than the scaling of *nₗ*, *K_{M}* > *K_{N}* is generally expected, which was confirmed thereafter. This is a powerful fact, because it frees the restrictions set on the joint-temporal amplitude for separability in the photon pair regime if one is instead interested in high-gain squeezing which is the case in this disclosure.

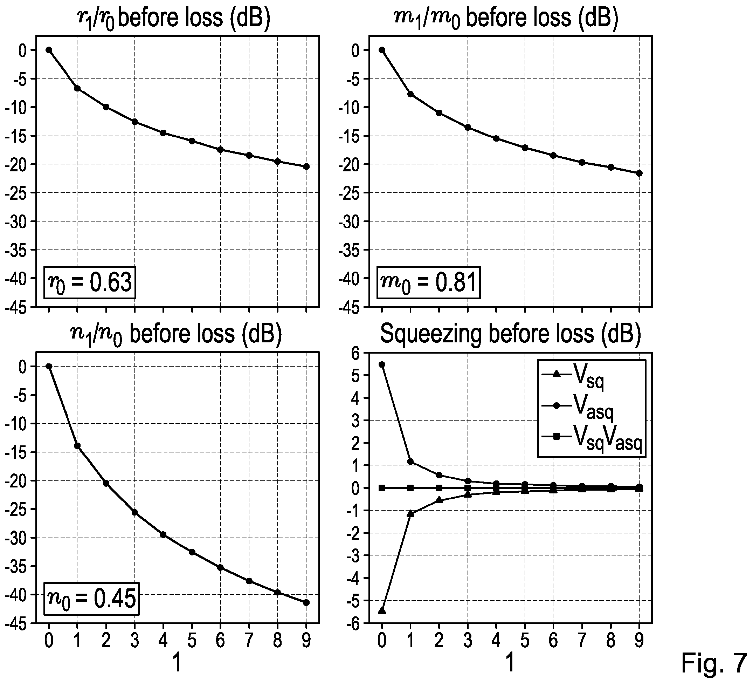

Fig. 7 shows the first 10 values of *rₗ, mₗ* and *nₗ* as well as the associated squeezing and anti-squeezing before loss calculated using Eq. (38). From this figure, it can be appreciated how the different scaling of *rₗ, mₗ* and *nₗ* then lead to different Schmidt numbers. Comparing each value at a given *l,* a drop-off of *rₗ* is slower than *mₗ* which is slower than *nₗ* due to the different nonlinear scalings. Finally, it was found that the squeezed state before loss is pure as can be seen by the fact that the amount of squeezing can equal the amount of anti-squeezing as confirmed by the middle line which is related to the inverse purity of the state.

In an aspect, there is presented an embodiment in which the pulse durations of the pump pulses are long compared to the round-trip cavity time, which was found to enhance pump efficiency even when operating at high-pump energies in the above-threshold regime.

It is well known that in the photon pair limit, for a three resonance system with equal quality factors, the Schmidt number *K_{JTA}* has a lower bound of *K_{JTA}* ≈ 1.09 and is asymptotically approached as the pulse duration of the pump becomes short compared to the ring decay time. The reason for this behaviour is easier understood in frequency. In the photon pair limit, photons can be created at frequencies across the resonance subject to the condition of energy conservation set by the spectral shape of the two pump involved in the four-wave mixing. In the extreme limit of CW pumping, energy conservation is strict and the resulting joint spectral amplitude is strongly correlated in the anti-diagonal direction and as a result will have a *K_{JTA}* ≫ 1. To minimize *K_{JTA},* the bandwidth of the pump relative to the linewidth of the resonance must be increased thereby relaxing the range over which the conservation of energy is satisfied and decreasing the correlation, i.e., a very short pulse is required, much shorter than the decay time of the ring to minimize *K_{JTA}.*

Due to this limit, there are two problems that follow. First, having such a broad bandwidth significantly decreases the generation efficiency, because a significant fraction of the energy of the pulse is off resonance and is thus wasted. Second, for situations when *K_{JTA} =* 1.09 is not sufficient, other tricks must be employed to generate photon pairs with a joint-spectral amplitude where *K_{JTA}* → 1 with arbitrary precision. For example, if instead of a static coupler an interferometric coupler was used that allows individual control of the coupling of different resonances, one can tune *K_{JTA}* → 1. In tuning the coupler one can effectively lower the Q of the pump resonances so that Γ̅*_{G}* ≪ Γ̅*_{R},* Γ̅*_{B}* (for the three resonance system) and the widths of the joint-temporal amplitude are governed by the signal resonance. Of course, if the total Q of the pumps is lowered this will also decrease the generation rate. Another technique involves sending in a "double pulse" where the second pulse is delayed and has a π phase shift. The technique works via the second pulse interfering with the first pulse at the coupler to effectively increase the pump spectral width inside the cavity. This has the benefit that it does not involve modifying the Qs of the resonant cavity, but also comes at a cost of decreased pump efficiency.

The above mentioned limitations on *K_{JTA}* and the techniques used to engineer it are only valid in the photon pair regime where these calculations where made. In the "high-gain limit", which is the interest here in this disclosure, there exists less information on the bounds of the Schmidt number(s) as the different pump parameters are varied. In the quest to determine the most efficient set of parameters to generate the most squeezing within the constraints of the Schmidt number, one can focus on the pump pulse duration, which by being made longer will increase the generation efficiency, but by the intuition of the photon pair regime will degrade *K_{JTA}.* However, in the "high-gain" limit, the definition of the Schmidt number is not trivial. A general squeezed state is fully described by either the joint-temporal amplitude or the calculated moments; in the photon pair regime these two descriptions are proportional to each other. If instead one is interested in the generation of many photon pairs, the joint-temporal amplitude may not be best tool for describing the state because it contains information on individual photon pairs and not the many photon pairs that the squeezed state contains. As a result, it is not obvious a priori if *K_{JTA}* → 1 is ultimately what should be targeted.

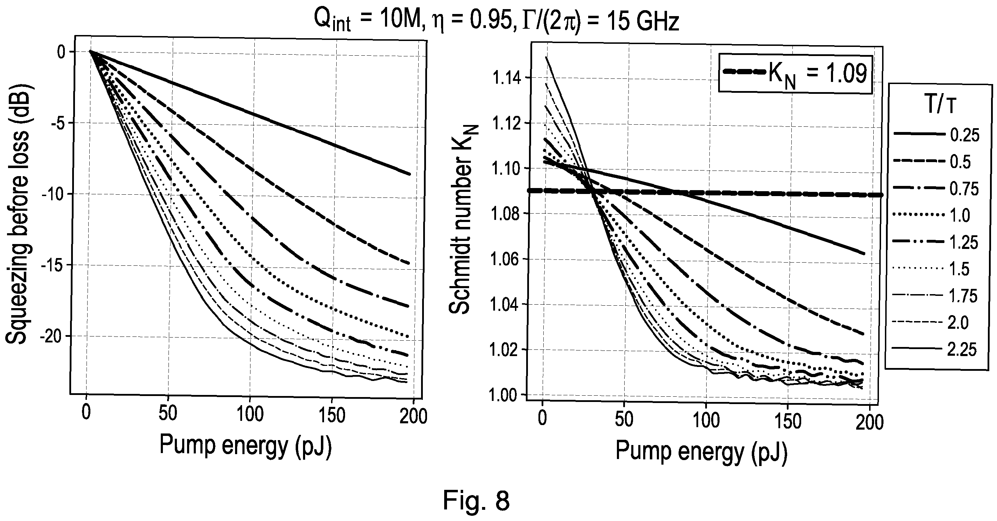

In the following paragraphs, results are presented for a square pulse for each pump, but other pulse shapes like a Gaussian would have qualitatively the same results. The same set of resonances R, G, B are computed on the same auxiliary ring radius, but focussing solely on an auxiliary ring coupling of Γ/(2*π*) = 15 GHz and setting *β*₂ = 0.6ps²/*m* to ensure sufficient suppression of parasitic processes. Although used in this example, the auxiliary resonant cavity can be omitted in some embodiments. The intrinsic Q and escape efficiency of each resonance are respectively set by *Qᵢₙₜ =* 10M and *η* = 0.95 for all resonances. The pulse duration of each pump are set to be the same *T_{R} = T_{B} = T* and are parametrized in reference to the intensity decay time of the ring which is set by *τ_{R}* = 1/(2Γ_{R}) and *τ_{B}* = 1/(2*Γ̅_{B}*) with *τ_{R} = τ_{B}* = *τ,* so the parameter varied is *T*/*τ.* As a function of pulse energy and for different values of *T*/*τ,* the squeezing is calculated over the common and symmetric detunings. Fig. 8 shows the optimum value of the squeezing before loss and corresponding *K N.* Focusing on the squeezing plot, one can see that a significant enhancement in the amount of squeezed at a fixed pump energy as the pulse duration is increased. This is because for longer pulses more energy drives the system on resonances leading to a greater amount of pump efficiency. As for the longest pump duration at high energies, the squeezing eventually saturates due to the onset of spurious processes that are still present.

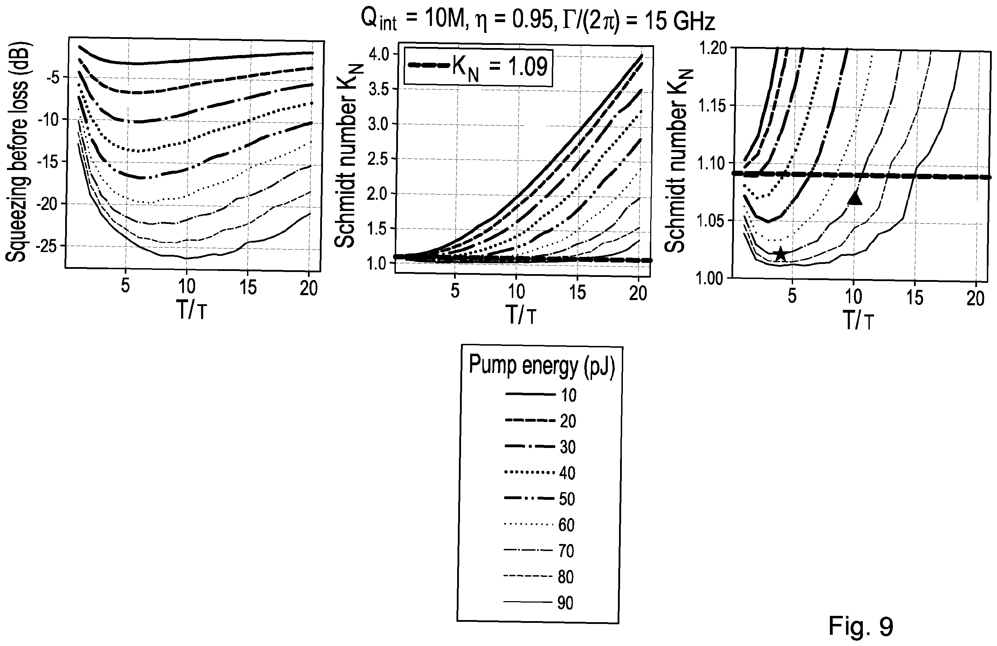

Consider now the plot for the Schmidt number *K*_{N} shown on the right of Fig. 8. At low pump energies, i.e., below threshold, where the photon pair regime is a good approximation, lower Schmidt numbers are achieved with shorter pulses and approach the limit of 1.09 set by the photon pair regime. As the pump energy is increased, one can witness a cross-over point at which *longer pulses* lead to *lower* values of *K*_{N} contrary to usual intuition. At high energies, i.e., above the threshold, the longest pulse approaches the value *K*_{N} ≈ 1.005 meaning that the corresponding *N* moment is to very good approximation separable. This result is initially counter-intuitive because for sufficiently long pulses one would expect that the dynamics behave as a quasi-CW source for which *K*_{N} should become much larger than unity. This is further explored in the results presented in Fig. 9 where the simulations were repeated considering even longer pulses relative to the ring decay time. However, Fig. 9 shows the results as a function of the pulse duration where each curve corresponds to a different pulse energy. It is found that at a given pump energy, for a sufficiently large pulse duration, the Schmidt number *K*_{N} indeed increases as it should. However, intermediate behaviour can be observed too, where at a certain energy, pump pulses with a longer duration lead to lower Schmidt numbers, and in the most dramatic case of high pump energies, this behaviour persists for pulses that are 10 times the decay time of the ring. It is found that the squeezing follows the same trend which is expected since they are calculated from the first eigenmode of the *N* moment. To determine what is driving this behaviour, the simulation was simplified by removing the parasitic processes and moved back to the three resonances system discussed previously. Focus was directed to two data points denoted by the star and triangle in Fig. 9.

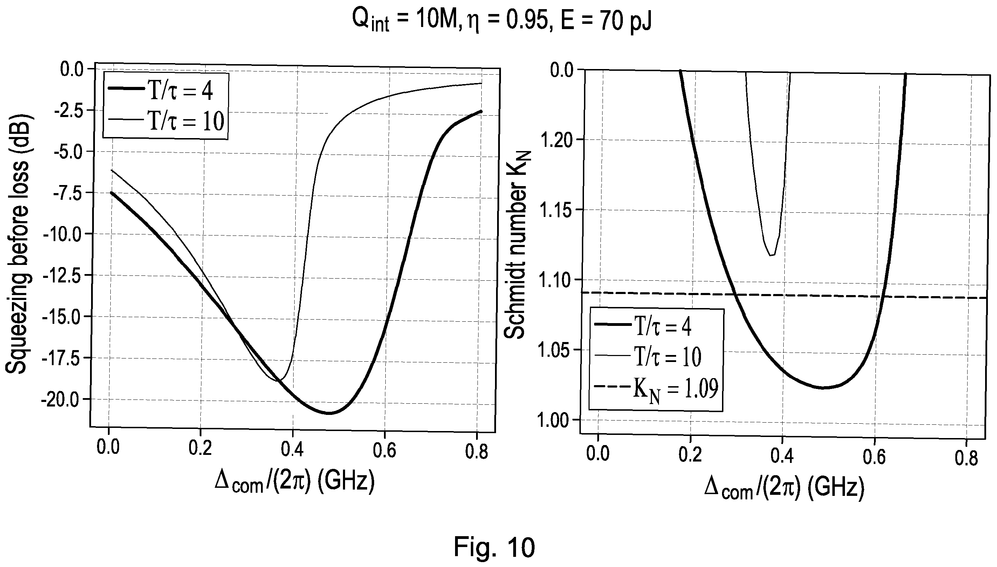

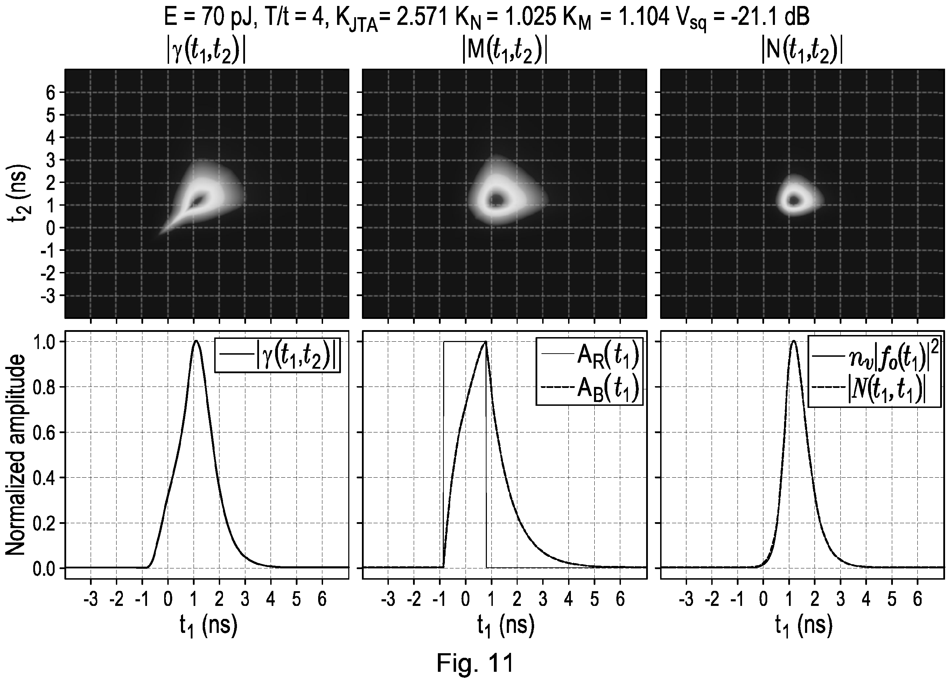

Fig. 10 shows the squeezing and Schmidt number *K*_{N} versus a common detuning for pumps. The behaviour of the squeezing and Schmidt number is very sensitive to the optimization over detuning. Further, the region of large squeezing and small Schmidt number decreases for the longer pulse due to less bandwidth available as well as the pumps approaching a steady state. To explore further, the optimum detuning is taken for the lowest Schmidt number and used to plot the joint-temporal amplitude and the moments, in the top row of Fig. 11 for *T*/*τ =* 4. In the bottom row of Fig. 11, the diagonal contribution to the joint-temporal amplitude, the pump amplitudes in the ring, and the diagonal contribution of the *N* moment together with its first eigenmode are plotted. All plots are scaled by their maximum values. To get to the bottom of why low Schmidt numbers can correspond to longer pulses, three nonlinear effects are considered one after the other.

The first is the pumps in the ring experience self- and cross-phase modulation that effectively shifts the resonances dynamically as the pump is loaded. As a result, for pulse durations on the order of a few cavity lifetimes the pump pulse in the resonant cavity never reaches a steady state. This can be observed from Fig. 11 for the pump amplitudes in the bottom middle plot where the pump amplitude reaches its maximum value when the incident pump field is turned off.

The second nonlinear effect is that the generation of squeezed light depends on the product of the two pump amplitudes in the resonant cavity. This has the effect that although the pumps are in the resonant cavity for a length of time greater than a few cavity lifetimes, the generation of the signal is weighted to the end of the pulse. This is witnessed from the diagonal contribution of the joint-temporal amplitude in the bottom left-hand plot of Fig. 11. Towards the end of the pump pulse, the slope of the diagonal contribution to the joint-temporal amplitude increase relative to the first section and so the probability density of a photon pair is greater towards to the end of the pump pulse. This asymmetry that is created from the nonlinear scaling is crucial for the third nonlinear contribution to this result. It is again emphasized that in the "high-gain" regime, i.e., the above threshold regime, the joint-temporal amplitude does not provide an intuitive description of the resulting photon statistics of the whole state which includes many photon pairs. This is evident from the plots of top row of Fig. 11, which show the density plots (all normalized by their maximum values to one) of the joint-temporal amplitude and the *M* and *N* moments. Clearly, the initial behaviour of the joint-temporal amplitude for which the pump is building in the resonant cavity is not significant for the overall behaviour of the moments.

The behaviour of the joint-temporal amplitude and the resulting photon statistics of the moments is the third nonlinear process that allows for a approximately separable state when using long pulses and is a result of the joint-temporal amplitude being "in the exponential" of the squeezed state and so its contributions scale nonlinearly. The Schmidt decomposition of the joint-temporal amplitude was considered and the moments in terms of that Schmidt basis were calculated. From that calculation, one could find that the Schmidt amplitudes of the joint-temporal amplitude are *rₗ,* but the amplitude of the moments scale nonlinearly with *rₗ* and are respectively given by *nₗ* = *sinh²*(*rₗ*) and *mₗ* = *sinh*(2*rₗ*)/2 (see Eq. (27)). This implies that as long as the first Schmidt amplitude *r*₀ is sufficiently large enough and not equal to *r*₁, *n*₀ and *m*₀ can be exponentially larger than *n*₁ and *m*₁. As a result, the joint-temporal amplitude can have a large Schmidt number, *K_{JTA}* = 2.572 as given by Fig. 11, but the corresponding Schmidt number for the moments can be much smaller and given by *K_{N}* = 1.025 and *K_{M}* = 1.104. This nonlinear scaling is why a trade-off is observed in Fig. 10 where for low energies *n*₀ is not sufficiently large and so longer pulse duration are worse for the temporal separability of the moments. It is noted that, in this example, *K_{N} < K_{M}* and is expected to be generally true unless *K_{JTA}* = 1 and is due to the different scaling of *nₗ* and *mₗ* with *rₗ.* But in the high-gain limit, where *sinh*(*rₗ*) → *e^{rₗ}, mₗ* → *nₗ* is expected and *K_{M}* will asymptotically approach *K_{N}.*

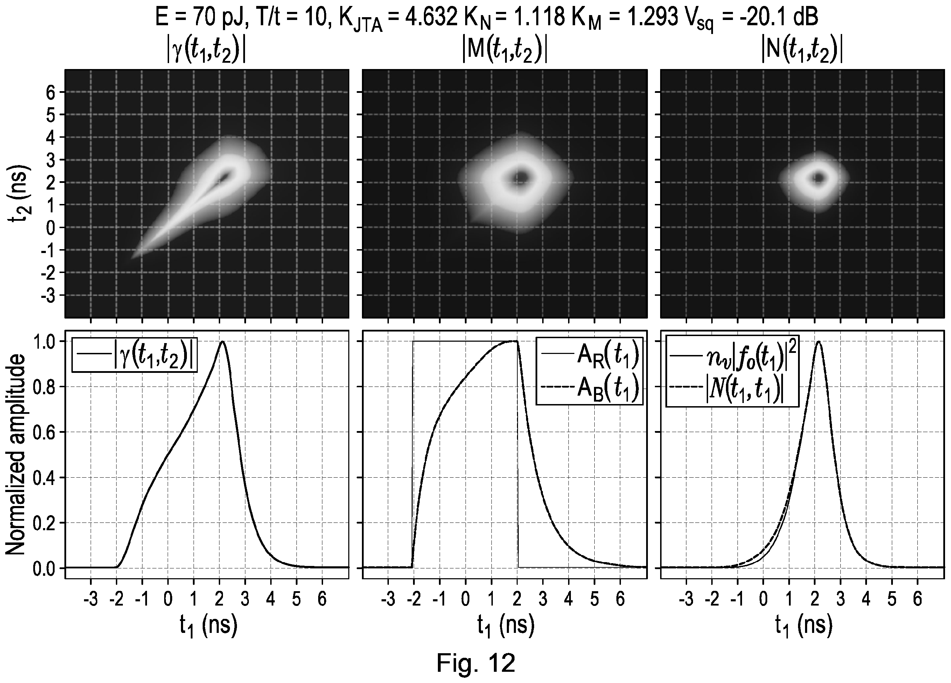

The discussion above was solely concerned with a pulse duration given by *T*/*τ* = 4. But as mentioned, it is expected that at some point for sufficiently long pulses (at a fixed energy), the separability of the joint-temporal amplitude and moments should approach the quasi-CW limit and begin to increase again. This was shown in Fig. 9 by the triangle corresponding to *T*/*τ =* 10. Fig. 12 shows the corresponding quantities as in Fig. 11 for *T*/*τ =* 10 and one can start to see how the arguments made earlier begin to break down. For sufficiently long pump pulses, the pump amplitude in the resonant cavity approaches a quasi-steady state at its maximum amplitude. The "shoulder" of the pump amplitude is therefore larger in comparison to Fig. 11 and then contributes more to the photon pair generation as can be seen by the diagonal of the joint-temporal amplitude, which is still asymmetric, but is significant over a longer duration. As expected, all three Schmidt numbers increase and one can see remnants of the joint-temporal amplitude in the moments. In this case the difference between *n*₀ and *m*₀ is not enough to exponentially enhance the first temporal mode. To do so would require more pump energy as can be seen from Fig. 9.

The previous paragraphs have emphasized that the properties of photon pairs do not correspond to the properties of photon states. Further, since the squeezed state, which is a Gaussian state, is fully specified by its moments, the separability of the state is determined by the separability of its moments. Therefore, the separability condition that *K_{JTA} =* 1 is a sufficient, but not necessary condition for the separability of the state itself. Finally, since longer pulses are generally more efficient due to the narrow bandwidth as well as better at suppressing parasitics, they can offer a significant advantage when generating squeezed states with a large amount of squeezing.

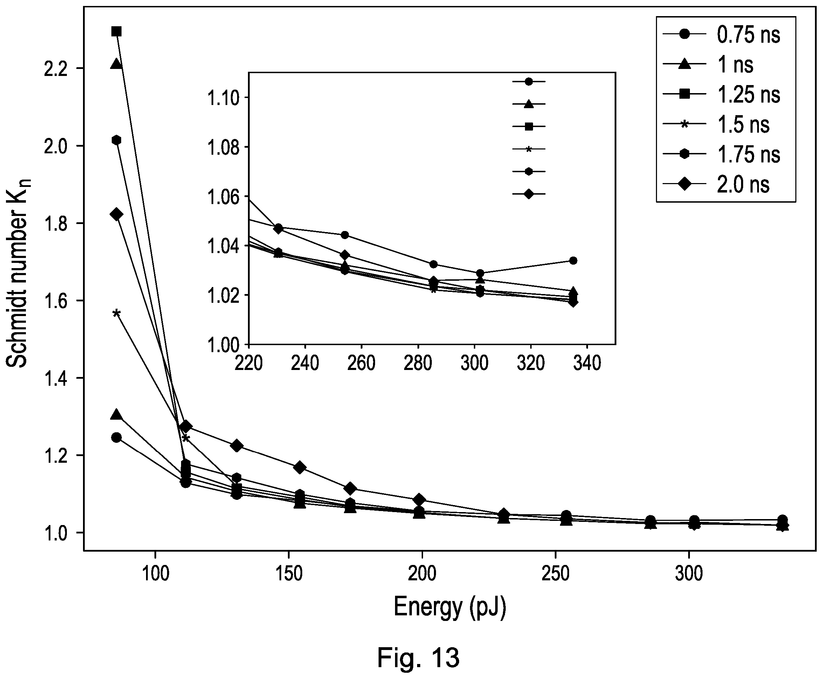

The following paragraphs explore the possibility of using longer pump pulses (typically higher than 1 ns) as a way to get to lower Schmidt number, Kₙ, and larger number of squeezed photons. More specifically, Fig. 13 shows the Schmidt number (Kₙ) measurement for different energies and pump pulse durations. Energy label on x-axis is the estimated energy per pump at the squeezer. Here the trend is clearly seen that, at low energies around < 250 pJ, shorter pulses have lower Schmidt number, like the shortest pulse indicated by the solid circles, and it's better to use shorter pulses. However, when energy is larger, > ~ 250 pJ, longer pulses have the better (lower) Schmidt number, like the longest pulse duration indicated by the solid diamonds. This is evident after zooming in to region with small Schmidt number measurements, as shown in the inset of Fig. 13. This trend matches simulations as shown in Fig. 8.

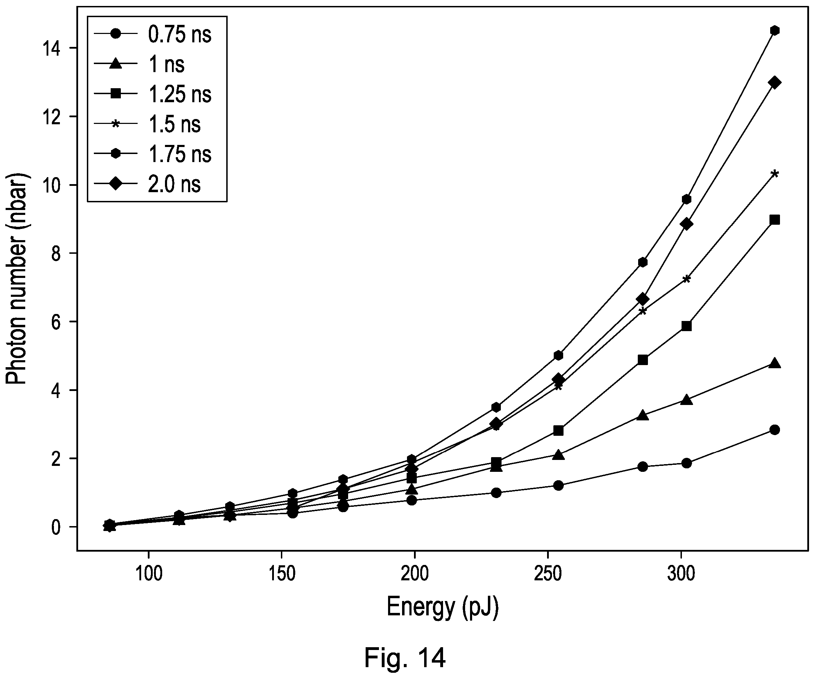

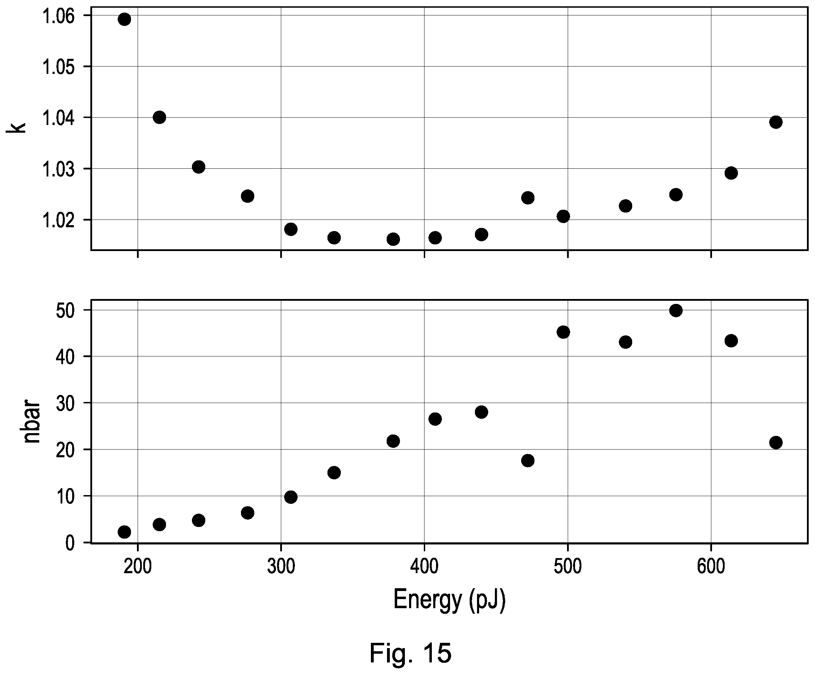

Photon number is always larger for wider pulses and higher energies, as seen in Fig. 14. As depicted, the Schmidt number was measured at 6 pump pulse durations and 11 energies. Pulse energies were swept from 80 pJ to ~ 335 pJ, while pulse durations were incremented in steps of 0.25 ns from 0.75 ns to 2.0 ns. The pump-duration/energy experiments above suggested that for large pulse durations, one might see a further decrease in Schmidt number as the energy is increased. Fig. 15 shows the Schmidt number at higher energies with a fixed pump pulse duration of 2 ns, and energy was swept from 200 pJ to 650 pJ.This trend was very repeatable. As shown in Fig. 15, the Schmidt number first decreased until around 420 pJ, for which the smallest Schmidt number measured was 1.012, and then the Schmidt number started getting worse. This later trend of worsening k cannot be explained through simulations (as shown in Fig. 8), which show a continued improvement k, but may be attributed to about 50 cm of UHNA4 fiber that couples light into the chip, and other non-linear effects that may be happening in the fiber.

In accordance with this aspect, the proposed apparatus for squeezed light generation generally includes an optical medium which has a third-order nonlinearity and includes a resonant cavity. A first pump light source is optically coupled to the resonant cavity for propagating first pump light pulses therealong. A second pump light source is also optically coupled to the resonant cavity for propagating second pump light pulses therealong. As discussed above, the first pump light pulses have a first pump pulse energy E1 whereas the second pump light pulses have a second pump pulse energy E2, at least one of which being greater than the energy threshold E_{th,ppr} associated with a photon pair regime. As such, the first and second pump light pulses generate a signal light beam in a squeezed state of light via four-wave mixing in the optical medium, which can lead to the generation of dynamical self-phase modulation and/or dynamical cross-phase modulation on the first and second pump light pulses within the optical medium. To mitigate these adverse effects of pumping the resonant cavity in the above threshold regime, the first light pulses have a first pulse duration and the second light pulses have a second pulse duration which are set to enhance pumping efficiency of the resonant cavity. More specifically, as disclosed above, either one or both of the first pulse duration and the second pulse duration are made greater than a photon pair regime duration threshold associated with pump pulse durations used in generating squeezed light in the photon pair regime. In some embodiments, the resonant cavity has a propagation length which defines a cavity decay time on which is based the photon pair regime duration threshold. Indeed, in some embodiments, photon pair regime duration threshold corresponds to the cavity decay time. In these embodiments, the first and/or second pulse durations are made greater than the cavity decay time of the resonant cavity. The first and/second pulse durations can be expressed in terms of a normalized pulse duration by dividing the corresponding pulse duration *T* by the cavity decay time *τ,* i.e., *T*/*τ.* In some embodiments, it was found preferred to pump the resonant cavity with normalized pulse durations *T*/*τ* exceeding 2, preferably exceeding 5 and most preferably exceeding 10, depending on the embodiment. By doing so, the pumping efficiency can be improved by reaching a Schmidt number Kₙ which is below a reference Schmidt number K_{n,ref} (e.g., 1.09) generally associated with the photon pair regime, as presented above.

In another aspect, there is presented an embodiment in which the pump pulses are chirped in a way which can cancel undesirable effects due to operation in the above-threshold regime. Indeed, in the literature, the generation of squeezed light is often limited to photon pairs in the low pump energy regime (i.e., the below thresold regime) and within this limit the effects of self- and cross-phase modulation are rightfully neglected. However, as shown above, to generate a large amount of squeezed light, pump light sources may be operated above-thresold at high pump energies. In these cases, one may sweep over the pump detunings to compensate for phase modulations on the pumps. As a result, there are adverse effects on the pump efficiency, because one never pump on resonance due to the resonance moving. Up until now, the degrees of freedom of the incident pumps that were considered were limited to a static detuning, but it was found that one can also consider varying the phase or *chirp* of the incident pulses as a function of time. In the following paragraphs, this new degree of freedom is explored thoroughly. It is shown that by properly setting the phase of the incident pump, one can cancel the effects of self- and cross-phase modulation on the pumps thereby increasing their efficiency.

With an adequate understanding of the suppression of unwanted resonances, carefully tuning the chip factors of the pump light pulses, also referred to as "pre-chirping" is explored in the three-resonance system. However, it is contemplated that such pre-chirping can also be applied to N-resonance systems as well. The classical and quantum dynamics of the exemplary three-resonance system are given by Eq. (13), which are reproduced below in the appropriate rotating frame for convenience:
$\begin{matrix}\left(\frac{d}{dt}+{\overline{Γ}}_{R}-i\left({Δ}_{R}+Λ{\left|{\overline{A}}_{R}\left(t\right)\right|}^{2}+2Λ{\left|{\overline{A}}_{B}\left(t\right)\right|}^{2}\right)\right) {\overline{A}}_{R} \left(t\right) = - {iγ}_{R}^{∗} {f}_{R} \left(t\right) \\ \left(\frac{d}{dt}+{\overline{Γ}}_{B}-i\left({Δ}_{B}+Λ{\left|{\overline{A}}_{B}\left(t\right)\right|}^{2}+2Λ{\left|{\overline{A}}_{R}\left(t\right)\right|}^{2}\right)\right) {\overline{A}}_{R} \left(t\right) = - {iγ}_{B}^{∗} {f}_{B} \left(t\right) \\ \left(\frac{d}{dt}+{\overline{Γ}}_{G}-i\left(\frac{{Δ}_{r} + {Δ}_{R} + {Δ}_{B}}{2}+2Λ\left({\left|{\overline{A}}_{R}\left(t\right)\right|}^{2}+{\left|{\overline{A}}_{B}\left(t\right)\right|}^{2}\right)\right)\right) {\overline{a}}_{G} \left(t\right) = i 2 Λ {\overline{A}}_{R} \left(t\right) {\overline{A}}_{B} \left(t\right) {\overline{a}}_{G}^{†} \left(t\right) + {\overline{d}}_{G <} \left(t\right) ,\end{matrix}$ (41)

To consider an arbitrary chirp function, the following is set:
${f}_{R} \left(t\right) = {g}_{R} \left(t\right) {e}^{- {iϕ}_{R} \left(t\right)} , {f}_{B} \left(t\right) = {g}_{B} \left(t\right) {e}^{- {iϕ}_{B} \left(t\right)} ,$ (42)
where each function on the right-hand side is now a real function of time. To see exactly how the phase of the pump impacts the amplitudes in the resonant cavity, one can move to a frame rotating at the phase of the pump by setting:
$\begin{matrix}{\overline{A}}_{R} \left(t\right) = {{A}^{˜}}_{R} \left(t\right) {e}^{- {iϕ}_{R} \left(t\right)} {\overline{A}}_{B} \left(t\right) = {{A}^{˜}}_{B} \left(t\right) {e}^{- {iϕ}_{B} \left(t\right)} , \\ {\overline{a}}_{G} \left(t\right) = {{a}^{˜}}_{G} \left(t\right) {e}^{- i \frac{{ϕ}_{B} \left(t\right) + {ϕ}_{R} \left(t\right)}{2}} , {\overline{d}}_{G} \left(t\right) = {{d}^{˜}}_{G} \left(t\right) {e}^{- i \frac{{ϕ}_{B} \left(t\right) + {ϕ}_{R} \left(t\right)}{2}} .\end{matrix}$ (43)

Then, in the new rotating frame:
$\begin{matrix}\left(\frac{d}{dt}+{\overline{Γ}}_{R}-{iδ}_{R}\left(t\right)\right) {{A}^{˜}}_{R} = - {iγ}_{R}^{∗} {g}_{R} \left(t\right) \\ \left(\frac{d}{dt}+{\overline{Γ}}_{B}-{iδ}_{B}\left(t\right)\right) {{A}^{˜}}_{R} \left(t\right) = - {iγ}_{B}^{∗} {g}_{B} \left(t\right) \\ \left(\frac{d}{dt}+{\overline{Γ}}_{G}-{iδ}_{G}\left(t\right)\right) {{a}^{˜}}_{G} \left(t\right) = i 2 Λ {{A}^{˜}}_{R} \left(t\right) {{A}^{˜}}_{B} \left(t\right) {{a}^{˜}}_{G}^{†} \left(t\right) + {{d}^{˜}}_{G <} \left(t\right) ,\end{matrix}$ (44)
where:
$\begin{matrix}{δ}_{R} \left(t\right) = {Δ}_{R} + Λ {\left|{{A}^{˜}}_{R}\left(t\right)\right|}^{2} + 2 Λ {\left|{{A}^{˜}}_{B}\left(t\right)\right|}^{2} + {\dot{ϕ}}_{R} \left(t\right) , \\ {δ}_{B} \left(t\right) = {Δ}_{B} + Λ {\left|{{A}^{˜}}_{B}\left(t\right)\right|}^{2} + 2 Λ {\left|{{A}^{˜}}_{R}\left(t\right)\right|}^{2} + {\dot{ϕ}}_{B} \left(t\right) , \\ {δ}_{G} \left(t\right) = \frac{{Δ}_{r} + {Δ}_{R} + {Δ}_{B}}{2} + 2 Λ \left({\left|{{A}^{˜}}_{R}\left(t\right)\right|}^{2}+{\left|{{A}^{˜}}_{B}\left(t\right)\right|}^{2}\right) + \frac{{\dot{ϕ}}_{R} + {\dot{ϕ}}_{B}}{2} .\end{matrix}$ (45)

The effective detunings defined in Eq. (45) thus give the total shift acquired by the pumps and signal due to the chirp and phase modulation terms. When formulated in this manner, it becomes clear that when one appropriately chooses the phases *ϕ_{R}*(*t*) and *ϕ_{B}*(*t*), the effects of self- and cross-phase modulation can be cancelled.

Before considering specific cases, it is worth mentioning that in the pulsed regime, it is impossible to completely remove the effects of phase modulation on the generated signal with respect to the pumps. Consider the three time dependent shifts due to the phase modulations on each resonance (including the chirp from the pump) that are given by:
$\begin{matrix}{{ω}^{˜}}_{R} \left(t\right) = {ω}_{R} - Λ {\left|{{A}^{˜}}_{R}\left(t\right)\right|}^{2} - 2 Λ {\left|{{A}^{˜}}_{B}\left(t\right)\right|}^{2} - {\dot{ϕ}}_{R} \left(t\right) \\ {{ω}^{˜}}_{B} \left(t\right) = {ω}_{B} - Λ {\left|{{A}^{˜}}_{B}\left(t\right)\right|}^{2} - 2 Λ {\left|{{A}^{˜}}_{R}\left(t\right)\right|}^{2} - {\dot{ϕ}}_{B} \left(t\right) \\ {{ω}^{˜}}_{G} \left(t\right) = {ω}_{G} - 2 Λ \left({\left|{{A}^{˜}}_{R}\left(t\right)\right|}^{2}+{\left|{{A}^{˜}}_{B}\left(t\right)\right|}^{2}\right) - \frac{{\dot{ϕ}}_{R} + {\dot{ϕ}}_{B}}{2} ,\end{matrix}$ (46)
which for equally spaced resonances always satisfies:
$2 {{ω}^{˜}}_{G} \left(t\right) - {{ω}^{˜}}_{R} \left(t\right) - {{ω}^{˜}}_{B} \left(t\right) = - \frac{Λ}{2} \left({\left|{{A}^{˜}}_{R}\left(t\right)\right|}^{2}+{\left|{{A}^{˜}}_{B}\left(t\right)\right|}^{2}\right) .$ (47)

That is, for any choice of the phases *ϕ_{R}*(*t*) and *ϕ_{B}*(*t*)*,* the generated signal can always experience a phase shift equal to the average of the combined self-phase modulations of the pumps. This can be expected because of the presence of three quantities *δ_{R}*(*t*)*, δ_{G}*(*t*)*, δ_{B}*(*t*) that one would like to be zero, but only having two degrees of freedom given by the two pump phases *ϕ_{R}*(*t*) and *ϕ_{B}*(*t*). Nonetheless, it is found that pre-chirping the pumps can significantly increase the generation of squeezed light.

Choosing the appropriate phase (or it's derivative) is in general difficult due to the nature of the differential equation being nonlinear. One way to proceed would be to consider Taylor expanding the phase in a power series and then runs an optimization over each coefficient of the Taylor series where the amount of squeezing is what is optimized over. In practice, this can quickly turn into a lot of parameters even if a different set of basis function is used such as Hermite polynomials etc. To get around this large parameter space, one considers parameterizing the time derivative of the phase by a constant *c* according to:
${\dot{ϕ}}_{R} \left(t\right) = c Λ {\left|{{A}^{˜}}_{R}\left(t\right)\right|}^{2} , {\dot{ϕ}}_{B} \left(t\right) = c Λ {\left|{{A}^{˜}}_{B}\left(t\right)\right|}^{2} ,$ (48)
and refer to *c* as the "chirp factor." Although it cannot be guaranteed this is the optimal parameterization, it is believed that if some fraction of the phase-modulation is tracked, the required detuning of the pumps may be lower and so the efficiency should increase. At this point, the phase is still implicit on knowing the pump amplitude in the ring which, of course, depends on the phase itself. But since it's the time-derivate of the phase which is to be set, two more equations are added to the two coupled equations discussed above: the first two being the two pump equations. Thus, for a given chirp factor, the resulting phase generated from the choice of this parameterization can be uniquely determined.

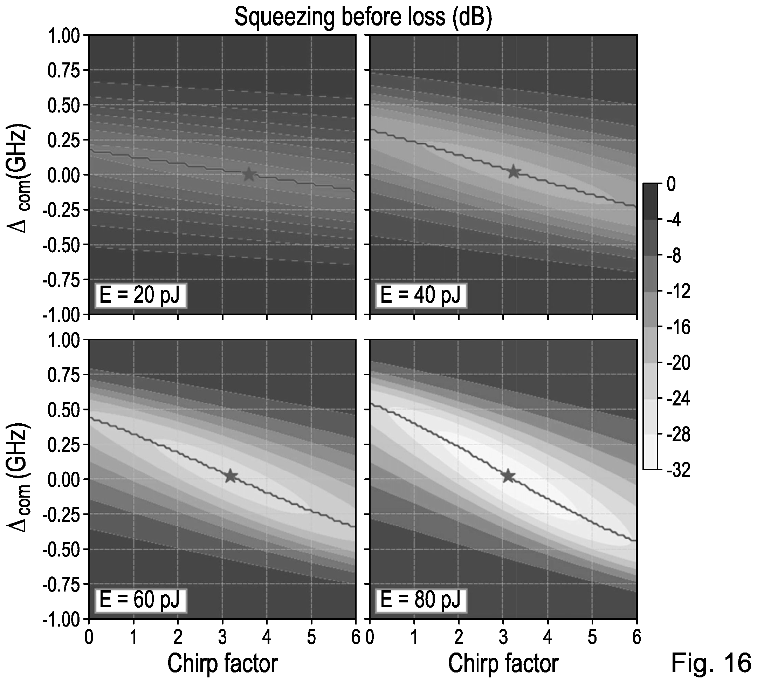

To explore the effects of chirping, one may start with an example calculation of three equally spaced resonances and vary the energy of the two pumps over the value E *=* 20,40,60,80 pJ and choose a pump duration of *T*/*τ =* 2. The same value of the intrinsic Qs and escape efficiency as above were considered. Since there are no parasitic effects and each pump is set to have the same energy, the pumps may experience the same phase-modulation and so the symmetric detuning is set to zero and varied over just the common detuning. Fig. 16 shows the squeezing before loss as a function of the common detuning and chirp factor. The thicker line across the plot corresponds to the optimum squeezing values for each chirp factor after optimizing over the detuning value. The star represents the maximum over both detuning and chirp. For low pump powers, the chirp factor makes little difference to the squeezing which is expected because the self- and cross-phase modulation on the signal is negligible. For a chirp factor of *c* = 0, it is observed that the maximum squeezing occurs at increasing values of the common detuning to compensate the effects of the phase modulations. For the higher energy plots, the contribution from the chirp factor is more pronounced and the maximum squeezing occurs at a chirp factor of *c* ≈ 3 and a common detuning Δ*_{com}* ≈ 0. This is perhaps not surprising because a chirp factor of approximately three cancels the effects of self- and cross-phase modulation for pumps of equal energies. As a result, in Fig. 16, a significant increase in the generated squeezing can be appreciated when the chirp factor is included of up to approximately 10 dB. The simulated results illustrated in Fig. 16 were further validated through experimental investigation. In particular, the simulated pump amplitude and phase profiles were directly supplied to an IQ modulator with minimal adjustments, and the resulting modulated pump signal was used to drive a double-ring photonic molecule. Transmission measurements of the pump were recorded, and the generated photons were detected using photon-number-resolving detectors (PNRs). This experimental procedure may be regarded as a partial benchmark of the simulation, insofar as trends in the measured quantities as a function of pump detuning and chirp factor were observed and compared against the simulated predictions, albeit without absolute calibration of downstream loss. Very good agreement between the experimentally observed trends and the simulated trends as a function of both chirp factor and detuning was confirmed, thereby lending substantial confidence to the accuracy and predictive utility of the simulation framework described herein.

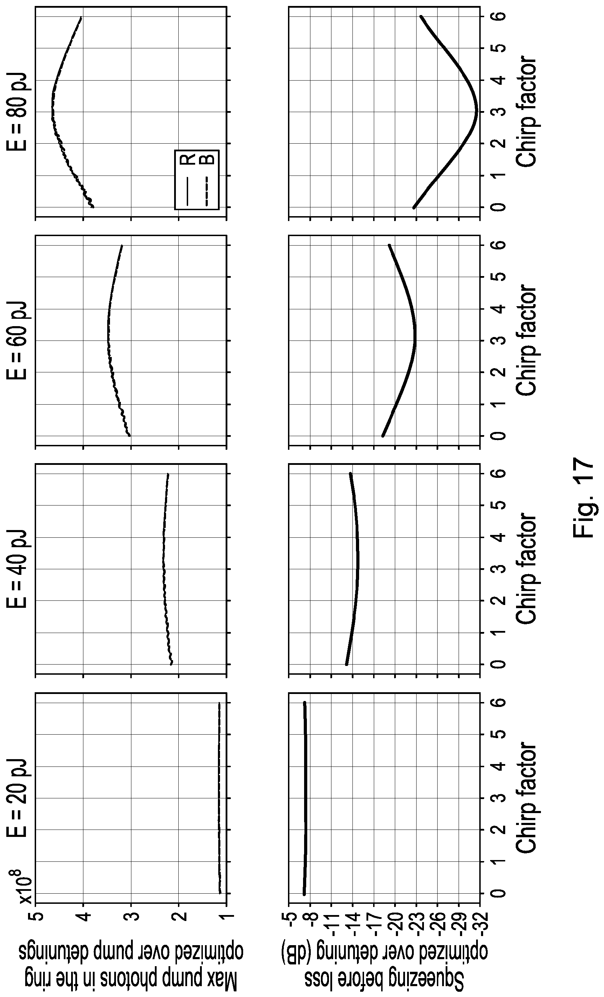

To confirm the source of the enhanced squeezing, Fig. 17 shows the maximum photon number of the pumps at the optimal detuning as a function of the chirp factor in the top row and in the bottom row the corresponding squeezing. It was found that for the highest pump energy, the number of photons in the ring can be approximately 20% lower for the case of zero chirping compared to the optimal chirp factor. Thus, by choosing the chirp factor to cancel the effects of self- and cross-phase modulation that acts on the pumps, the one can effectively pump the system on resonance and significantly enhance the amount of light coupled into the resonant cavity and therefore the amount of generated squeezing. Of course, this three-resonance scenario, in which no parasitic effects pollute the squeezing, may be idealized. However, it is clear from the results showed above that by chirping the pumps, one can enhance the pumping efficiency in the above-threshold regime.

In the above paragraphs, two independent ways to increase the efficiency of squeezed light generation were explored. The first involved varying the pulse duration of the pumps at varying energies. It was found that despite the pump pulses being long compared to the cavity decay time, single mode squeezed states can still be generated contrary to usual intuition. This effect was a result of multiple nonlinear scalings which led to the state temporal separability being exponentially enhanced. This emphasized that as the above-threshold regime was reached, highly squeezed states can still be obtained efficiently. The second way involved a classical aspect of squeezed light generation involving pre-chirping the pump pulses. It was shown that by properly choosing the phase of the pump pulses, the effects of self- and cross-phase modulation could be mitigated, allowing the system to be driven on resonance drastically increasing the pump efficiency.

In accordance with this aspect, the proposed apparatus for squeezed light generation generally includes an optical medium which has a third-order nonlinearity, and includes a resonant cavity. A first pump light source is optically coupled to the resonant cavity for propagating first pump light pulses therealong. A second pump light source is also optically coupled to the resonant cavity for propagating second pump light pulses therealong. As discussed above, the first pump light pulses have a first pump pulse energy E1 whereas the second pump light pulses have a second pump pulse energy E2, at least one of which being greater than the energy threshold E_{th,ppr} associated with a photon pair regime. As such, the first and second pump light pulses generating a signal light beam in a squeezed state of light via four-wave mixing in the optical medium, which can lead to the generation of dynamical self-phase modulation and/or dynamical cross-phase modulation on the first and second pump light pulses within the optical medium. To mitigate these adverse effects of pumping the resonant cavity in the above threshold regime, the first and second pump light pulses are chirped to corresponding non-zero chirp factors prior to their propagation along the optical medium and along the resonant cavity. More specifically, the first pump light pulses have a first non-zero chirp factor and the second pump light pulses have a second non-zero chirp factor. The first and second non-zero chirp factors are greater than zero, and can range between 1 and 10, preferably between 2 and 5 and is most preferably 3, depending on the embodiment. It was found that by providing such non-zero chirp factors for the first and second pump light pulses, the dynamical self-phase modulation and/or the dynamical cross-phase modulation can be suppressed with or without the use of an auxiliary resonant cavity. In some embodiments, the first non-zero chirp factor and the second non-zero chirp factor are approximately equal to one another. In some other embodiments, the first non-zero chirp factor and the second non-zero chirp factor differ from one another. The first and second non-zero chirp factors can be optimized using software simulations, experimental simulations, or a combination thereof. For instance, in some embodiments, actuators (e.g., knobs) controlling the first and second chirp factors can be manually modified to optimize the squeezing of the light inside the resonant cavity. In some other embodiments, these chirp controlling actuator(s) can be modified automatically based on sensor readings in a dedicated control loop.

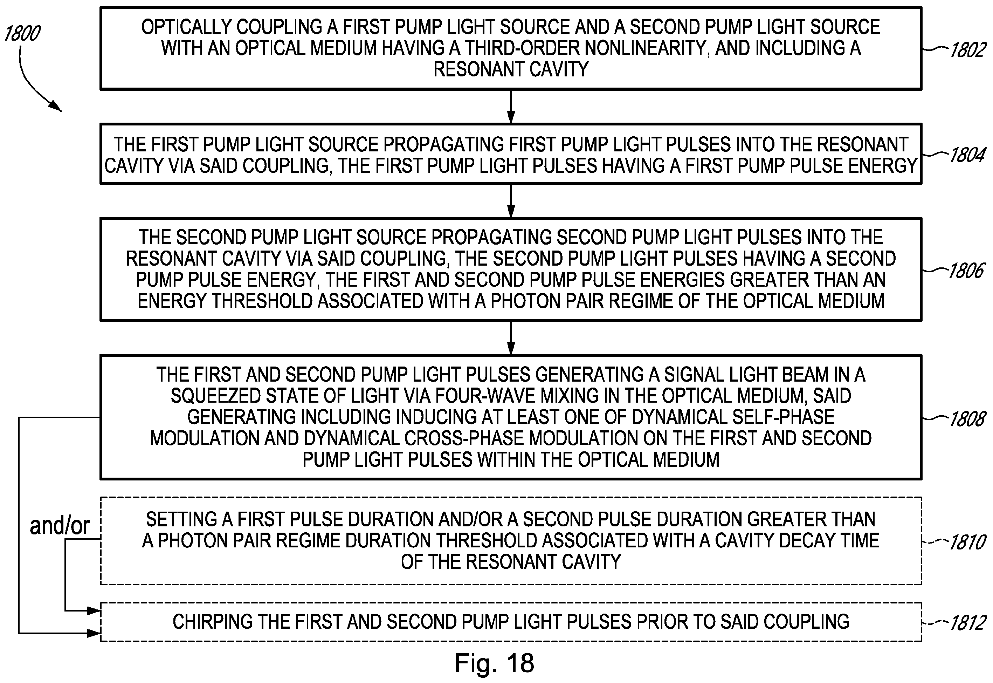

Fig. 18 shows a flow chart of an example of a method 1800 for generating squeezed light, in accordance with an embodiment. The method 1800 can be performed using the apparatus 100 described with reference to Fig. 1, for instance.

At step 1802, a first pump light source and a second pump light source are optically coupled with an optical medium having a third-order nonlinearity, the optical medium including at least a resonant cavity.

At step 1804, the first pump light source propagates first pump light pulses into the resonant cavity via the coupling. The first pump light pulses having a first pump pulse energy.

At step 1806, the second pump light source propagates second pump light pulses into the resonant cavity via the coupling. The second pump light pulses have a second pump pulse energy. As discussed above, to pump the resonant cavity in the above threshold regime, the first and second pump pulse energies are made greater than an energy threshold associated with a photon pair regime of the optical medium, in which case the first and second pump light pulses cause the generation of a signal light beam in a squeezed state of light via four-wave mixing in the optical medium, as per step 1808. The generation of the signal light beam can include the inducing at least one of dynamical self-phase modulation and dynamical cross-phase modulation on the first and second pump light pulses within the optical medium. The energy threshold can vary from one apparatus to another. However, the energy threshold can be empirically measured when for instance more than just a photon pair is simultaneously generated. For instance, the energy threshold can be met when a plurality of simultaneously photon pairs are generated within the resonant cavity.

At step 1810, the method 1800 includes a step of setting a first pulse duration of the first pump light pulses and a second pulse duration of the second pump light pulses greater than a photon pair regime duration threshold generally associated with a cavity decay time of the resonant cavity.

At step 1812, the method 1800 includes a step of chirping the first and second pump light pulses to corresponding non-zero chirp factors prior to their coupling to the resonant cavity.

It is understood that step 1810 and step 1812 can be performed simultaneously or sequentially. Furthermore, any one of the step 1810 and the step 1812 can be omitted in some embodiments. In other words, in some embodiments, the step 1810 can be performed while the step 1812 is omitted. In some other embodiments, the step 1810 can be omitted while the step 1812 is performed. However, it was found that in some specific circumstances, the step 1810 and the step 1812 can be performed in the method 1800, which can provide a number of corresponding advantages including, but not limited, enhancing pumping efficiency and suppressing or at least significantly reducing undesirable nonlinear effects such as the dynamical self-phase modulation and the dynamical cross-phase modulation occurring within the resonant cavity.

As can be understood, the examples described above and illustrated are intended to be exemplary only. It is noted that although the examples described above are directed to the basic three resonance system, the improvements described in this disclosure are also applicable to N-resonance systems as well. The scope is indicated by the appended claims.

## Claims

1. An apparatus for squeezed light generation, the apparatus comprising:
an optical medium (102) having a third-order nonlinearity, the optical medium (102) including a resonant cavity (104, 104a, 104b);
a first pump light source (106a) in optical communication with the resonant cavity (104, 104a, 104b) and propagating first pump light pulses (108a) therealong, the first pump light pulses (108a) having a first pump pulse energy; and
a second pump light source (106b) in optical communication with the resonant cavity (104, 104a, 104b) and propagating second pump light pulses (108b) therealong, the second pump light pulses (108b) having a second pump pulse energy;
wherein the first and second pump pulse energies are greater than an energy threshold associated with a photon pair regime, the first and second pump light pulses (108b)generating a signal light beam (116) in a squeezed state of light via four-wave mixing in the optical medium (102), said generating including inducing at least one of dynamical self-phase modulation and dynamical cross-phase modulation on the first and second pump light pulses (108b) within the optical medium (102).

2. The apparatus of claim 1 wherein the first light pulses have a first pulse duration and the second light pulses have a second pulse duration, at least one of the first pulse duration and the second pulse duration greater than a photon pair regime duration threshold associated with pump pulse durations used in generating squeezed light in the photon pair regime.

3. The apparatus of claim 2 wherein the resonant cavity (104, 104a, 104b) has a propagation length defining a cavity decay time, at least one of the first pulse duration and the second pulse duration greater than the cavity decay time of the resonant cavity (104, 104a, 104b).

4. The apparatus of claim 3 wherein the at least one of the first pulse duration and the second pulse duration is greater than the cavity decay time by a factor of one or above, preferably by a factor of five or greater, and most preferably by a factor of ten or greater.

5. The apparatus of any one of claims 1 to 4 wherein the squeezed state of light of the signal light beam (116) has a Schmidt number Kₙ below a reference Schmidt number K_{n,ref} generally associated with the photon pair regime.

6. The apparatus of claim 5 wherein the Schmidt number Kₙ is below 1.09.

7. The apparatus of any one of claims 1 to 6 wherein at least one of the first pump pulse energy and the second pump pulse energy is greater than 10 pJ, preferably greater than 20 pJ and most preferably greater than 30 pJ.

8. The apparatus of any one of claims 1 to 7 wherein the first pump light pulses (108a) have a first non-zero chirp factor and the second pump light pulses (108b) have a second non-zero chirp factor, the first chirp factor and the second chirp factor suppressing at least one of the dynamical self-phase modulation and the dynamical cross-phase modulation.

9. The apparatus of claim 8 wherein the first non-zero chirp factor and the second non-zero chirp factor are approximately equal to one another.

10. The apparatus of any one of claims 1 to 9 wherein the resonant cavity is a first resonant cavity (104a), the apparatus further comprising a second resonant cavity (104b) in optical communication with the first resonant cavity (104a), the second resonant cavity (104b) suppressing parasitic fields within the first cavity ring.

11. A method for generating squeezed light, the method comprising:
optically coupling a first pump light source (106a) and a second pump light source (106b) with an optical medium (102) having a third-order nonlinearity, the optical medium (102) including a resonant cavity (104, 104a, 104b);
the first pump light source (106a) propagating first pump light pulses (108a) into the resonant cavity (104, 104a, 104b) via said coupling, the first pump light pulses (108a) having a first pump pulse energy; and
the second pump light source (106b) propagating second pump light pulses (108b) into the resonant cavity (104, 104a, 104b) via said coupling, the second pump light pulses (108b) having a second pump pulse energy, the first and second pump pulse energies greater than an energy threshold associated with a photon pair regime of the optical medium (102); and
the first and second pump light pulses (108a, 108b) generating a signal light beam (116) in a squeezed state of light via four-wave mixing in the optical medium (102), said generating including inducing at least one of dynamical self-phase modulation and dynamical cross-phase modulation on the first and second pump light pulses (108a, 108b) within the optical medium (102).

12. The method of claim 11 wherein the first light pulses have a first pulse duration and the second light pulses have a second pulse duration, the method further comprising setting at least one of the first pulse duration and the second pulse duration greater than a photon pair regime duration threshold associated with pump pulse durations used in generating squeezed light in the photon pair regime.

13. The method of claim 12 wherein the resonant cavity (104, 104a, 104b) has a propagation length defining a cavity decay time, at least one of the first pulse duration and the second pulse duration greater than the cavity decay time of the resonant cavity (104, 104a, 104b).

14. The method of any one of claims 11 to 13 further comprising chirping the first and second pump light pulses (108a, 108b) prior to said coupling, the first pump light pulses (108a) have a first non-zero chirp factor and the second pump light pulses (108b) have a second non-zero chirp factor, the first chirp factor and the second chirp factor suppressing at least one of the dynamical self-phase modulation and the dynamical cross-phase modulation.

15. The method of claim 14 wherein the first non-zero chirp factor and the second non-zero chirp factor are approximately equal to one another.
